Europäisches Patentamt

European Patent Office

Office européen des brevets

(19)

(11) **EP 1 033 018 B1**

(12) **EUROPÄISCHE PATENTSCHRIFT**

(45) Veröffentlichungstag und Bekanntmachung des Hinweises auf die Patenterteilung:
**21.01.2004 Patentblatt 2004/04**

(51) Int Cl.⁷: **H04L 25/03**

(21) Anmeldenummer: **98962280.8**

(86) Internationale Anmeldenummer:
**PCT/DE1998/003406**

(22) Anmeldetag: **18.11.1998**

(87) Internationale Veröffentlichungsnummer:
**WO 1999/026383 (27.05.1999 Gazette 1999/21)**

(54) **EMPFÄNGER FÜR EIN TRÄGERMODULIERTES SIGNAL UND VERFAHREN ZUM BEARBEITEN EINES TRÄGERMODULIERTEN SIGNALS**

RECEIVER FOR A CARRIER-MODULATED SIGNAL AND PROCESS FOR TREATING A CARRIER-MODULATED SIGNAL

RECEPTEUR POUR SIGNAL A MODULATION DE PORTEUSE ET PROCEDE POUR LE TRAITEMENT D'UN TEL SIGNAL

(84) Benannte Vertragsstaaten:
**BE DE ES FR GB IT NL**

(30) Priorität: **18.11.1997 DE 19751087**

(43) Veröffentlichungstag der Anmeldung:
**06.09.2000 Patentblatt 2000/36**

(73) Patentinhaber: **iAd Gesellschaft für Informatik, Automatisierung und Datenverarbeitung mbH 90613 Grosshabersdorf (DE)**

(72) Erfinder:
• **BUMILLER, Gerd**
  **D-90762 Fürth (DE)**
• **HUBER, Johannes**
  **D-91094 Langensendelbach (DE)**

(74) Vertreter: **Dreykorn-Lindner, Werner, Dipl.-Ing. Patentanwalt, Steinlachstrasse 2 90571 Schwaig (DE)**

(56) Entgegenhaltungen:
**US-A- 5 313 495        US-A- 5 646 963
US-A- 5 712 877**

• **BUMILLER, GERD: "Verbesserte Empfänger für DECT (Diplomarbeit)" 18. September 1997 (1997-09-18), LEHRSTUHL FÜR NACHRICHTENTECHNIK II, UNIVERSITÄT ERLANGEN-NÜRNBERG, ERLANGEN, DE XP002108676 Kapitel 4, 5**
• **BUMILLER G ; HUBER J: "Intersymbol interference distortion cancellation in incoherent CPM receivers: DECT as example" CODIERUNG FUR QUELLE, KANAL UND UBERTRAGUNG (SOURCE, CHANNEL AND TRANSMISSION CODING), Nr. 146, 3. - 5. März 1998, Seiten 207-212, XP002106362 Aachen, Germany**

EP 1 033 018 B1

**Beschreibung**

Die Erfindung betrifft einen Empfänger für ein trägermoduliertes Signal und ein Verfahren zur Bearbeitung eines trägermodulierten Signals bei einer digitalen Signalübertragung.

Bei der Übertragung von Signalen wird heutzutage verstärkt von der digitalen Signalübertragung Gebrauch gemacht. Dabei wird das zu übertragende Signal - falls als analoges Signal vorliegend - zunächst digitalisiert und dann einem Trägersignal aufmoduliert. Das so erzeugte Sendesignal wird dann über einen Übertragungskanal - leitungsgebunden oder drahtlos - einem Empfänger zugeführt. Im Empfänger wird das empfangene Sendesignal dann demoduliert und derart bearbeitet, daß möglichst originalgetreu das Ursprungssignal wieder erzeugt ist.

Beispiele für derartige Übertragungssysteme sind u.a. digitaler Rundfunk, digitales Fernsehen, digitale Power-Line-Carrier-Systeme (PLC), der Mobilfunk oder sonstige digitale Nachrichtenübermittlungssysteme.

Ein spezielles Beispiel ist die Informationsübertragung beim digitalen schnurlosen Telefon nach dem DECT-Standard (Digital Enhanced Cordless Telecommunications). Dabei wird für die digitale Übertragung das GFSK-Modulationsverfahren (Gaussian Frequency Shift Keying) eingesetzt. Der Aufbau eines Empfängers nach dem DECT-Standard ist in der Regel einfach und umfaßt im wesentlichen einen analogen FM-Demodulator mit einem nachgeschalteten Abtaster und einem Schwellwertdetektor.

Um auch den zugehörigen Sender einfach aufbauen zu können, läßt der DECT-Standard für die Trägerfrequenz, den Frequenzhub und die Signalform große Toleranzen zu, wodurch der Einsatz von kohärenten Empfängern problematisch ist. Maßnahmen zur Entzerrung von Intersymbol-Interferenzen, die bei der Mehrwegausbreitung entstehen, sind im DECT-Standard nicht vorgesehen.

Praxiserfahrungen mit installierten DECT-Systemen haben gezeigt, daß speziell in größeren Gebäuden und auf großen Geländen eine Signalverbindung -sogar in der Nähe der Basisstation- nicht möglich ist. Grund hierfür ist der große Störabstandsverlust durch Intersymbol-Interferenzen infolge der Mehrwegausbreitung. Ebenfalls unbefriedigend ist die aufgrund der geringen Empfängerempfindlichkeit erzielte Reichweite der bisherigen Systeme.

In der Veröffentlichung "AN APPROACH TO PERFORMANCE ENHANCE-MENT OF NON-COHERENT EQUALIZER RECEIVERS" von L. Lopes et al., Proceedings of the 5th IEEE International Symposium on Personal, Indoor and Mobile Radio Communications (PIMRC 94), Netherlands, Haque, September 1994, Seiten 214 bis 218, wurde bereits eine verbesserte Empfängerstruktur vorgeschlagen.

Das Eingangssignal wird dort nach dem ZF-Filter im Symboltakt abgetastet. Danach wird dieses Signal mit zwei getrennten Detektoren bearbeitet und bis zur Datenfolge entschieden. Der erste Detektor hat einen Verzögerungs-Demodulator und einen 2-State-Viterbi-Entzerrer. Nach der Demodulation wird dabei mit Hilfe des 2-State-Viterbi-Algorithmuses der Kanal entzerrt und die Daten entschieden. Als Metrik in dem Viterbi-Algorithmus werden die Distanzen zwischen Soll- und Ist-Wert verwendet.

Das Empfangssignal wird in dem zweiten Detektor konjugiert komplex mit sich selber multipliziert. Dieser Vorgang bildet das Betragsquadrat des Empfangssignals, das dann mit einem Schwellwertentscheider ausgewertet wird. Der Empfänger entscheidet für jeden Burst, von welchem der beiden Detektoren die Datenfolgen nun ausgegeben wird. Diese Art der Datenentscheidung ist technisch schwierig zu realisieren.

In einer weiteren Veröffentlichung von L. Lopes et all, Proceedings of the 5th IEEE Vehicular Technologie Conference (VTC 95), Stockholm, Schweden, June 1995, Seiten 150 bis 154, wurde eine modifizierte Empfängerstruktur vorgeschlagen.

Die Ausgangssignale der schon aus dem vorherigen Empfänger bekannten Demodulatoren werden addiert und dann mit einem 2-State-Viterbi-Algorithmus verarbeitet Die Zweigmetrik in dem Viterbi-Algorithmus ist eine Distanzmetrik, wobei die Berechnung der Soll-Werte in der Veröffentlichung angegeben ist.

Bei der dort realisierten Struktur wird im Normalfall durch die Auswertung der Amplitude Rauschen addiert, ohne daß die Amplitude Nutzinformation enthält. Dadurch ergibt sich für diesen Kanal eine Verschlechterung in der Leistungseffizienz gegenüber bisherigen DECT-Empfängern.

Aus der DE 32 47 428 A1 ist ein Verfahren für einen Empfänger bekannt, bei dem AM-Störungen von einem FM-Signal subtrahiert werden, um das FM-Signal zu entstören.

Aus der EP 0 667 683 A2, der DE 39 10 739 C3 und den Veröffentlichungen PROAKIS, John G.: Digital Communications, McGraw-Hill Series in Electrical and Computer Engeneering, 3. Ausg., 1995, S.233-254 und KROSCHEL, Kristian: Datenübertragung, Eine Einführung, Springer Verlag, Berlin, 1991, S.193-205 sind Verfahren zur Datenübertragung beschrieben, bei denen u.a. der Viterbi-Algorithmus bei der Demodulation zur Anwendung kommt.

Aus der US-A-5 646 963 sind ein Empfänger und ein Verfahren entsprechend den Oberbegriffen der Ansprüche 1 bzw. 4 bekannt. Insbesondere ist in diesem Dokument ein Verfahren zur Dekodierung eines digital modulierten Signals beschrieben, wobei AGC-(Automatic Gain Control) Werte als Skalierungsfaktoren dazu eingesetzt werden, einen möglichst guten Vergleich zwischen Empfangs- und Erwartungswerten zu erzielen. Dabei wird auch das Auftreten von datenabhängigen Amplitudenveränderungen im Empfangssignal beschrieben, wobei zustandsabhängige AGC-Werte zur Skalierung von Empfangsund/oder Erwartungswerten verwendet werden. Dadurch wird die resultierende Metrik (quadratische Distanzmetrik) zu minimiert. Die AGC-Werte werden dabei von Abtastwert zu Abtastwert neu berechnet, wobei der für die Distanzminimierung ermittelte aktuelle AGC-Wert zur Skalierung bei der Metrikberechnung für den nächsten Abtastwert eingesetzt wird.

Der in der US-A-5 313 495 beschriebene Demodulator verwendet eine Maximum Likelihood Sequence Estimation (MLSE) zur Bitdetektion in einer Umgebung mit Mehrwegeempfang, die mit Hilfe eines 4-State-Viterbi implementiert wird. Dabei wird insbesondere der Mehrwegeempfang mit Verzögerungen unter einer Symboldauer betrachtet. Um bei der Detektion sowohl die Energie im Haupt- als auch im Nebenpfad (Reflektion) nutzen zu können, wird das 2-fach überabgetastete Empfangssignal für die Metriken verwendet. Das gleiche gilt dementsprechend auch für die Kanalschätzung, die von einem LMS-(Least Mean Square) Algorithmus zweiter Ordnung Gebrauch macht.

Die Kanalschätzung ermittelt aus den überabgetasteten Signalabtastwerten eine Frequenz-Offset-Funktion, eine Amplituden-Fading-Funktion und eine Phasenfunktion, aus denen die erwarteten Werte nach den Gleichungen (1)-(4) (Spalte5) berechnet werden. Die Zweigmetrik (Spalte 4, Zeile 60-68) für den Viterbi-Algorithmus besteht aus der Summe quadratischer Differenzen, für die beide im Abstand einer halben Abtastperiode ermittelten Signalabtastwerte gebildet werden. Dabei gehen in den Differenzterm lediglich der aktuelle Abtastwert und die Erwartungswerte des aktuellen und vorangegangenen Zustandes ein.

Der Erfindung liegt die Aufgabe zugrunde, einen Empfänger und ein zugehöriges Verfahren für eine inkohärente Demodulation eines linear verzerrten Sendesignals anzugeben, wobei ein verbesserter Empfang gegenüber dem Stand der Technik gegeben sein soll.

Vorliegend wurde von der Frage ausgegangen, wie der Übertragungsweg anhand eines Simulationsmodells nachgebildet werden kann. Der Übertragungsweg beinhaltet den inkohärenten Demodulator, welcher die linearen Verzerrungen in nichtlineare Verzerrungen überführt. Ein derartiges Modell sollte möglichst alle Nichtlinearitäten des reellen Übertragungsweges enthalten. Bei den detaillierten Untersuchungen an einem Modell wurde dabei festgestellt, daß das demodulierte Signal einen Rauschanteil enthält, der abhängig von den gesendeten Daten ist. Auf Basis dieser Erkenntnis wurde ein Kanalmodell entwickelt, das einerseits nichtlineare Verzerrungen und andererseits datenabhängiges Rauschen beschreibt.

Die Lösung der Aufgabe bezüglich des Empfängers und des Verfahrens gelingt erfindungsgemäß mit den Merkmalen des Anspruchs 1 bzw. des Anspruchs 4. Weitere vorteilhafte Ausgestaltungen ergeben sich aus den übrigen Patentansprüchen. Eine bevorzugte Anwendung der Erfindung ist wie bereits oben beschrieben beim Mobilfunk, insbesondere bei Empfängern nach dem DECT-Standard, gegeben. Selbstverständlich läßt sich die Erfindung jedoch auch auf vielfältigste Empfänger, z.B. beim digitalen Kurzwellenfunk mit einem ADPSK-Verfahren ( Amplitude and Differential Phase Shift Keying), anwenden, bei denen ein trägermoduliertes Signal demoduliert werden muß. Dies gilt insbesondere auch für drahtlose oder auch leitungsgebundene Empfangsverfahren.

Als leitungsgebundenes Übertragungsverfahren kann beispielsweise ein PLC-Verfahren (Power Line Carrier) genannt werden, bei dem eine Information trägermoduliert - beispielsweise über das bestehende elektrische Energieversorgungsnetz - übertragen wird. Prinzipiell kann dieses Verfahren zur Nachrichtenübertragung, z.B. zur Sprachübertragung, oder auch zur Übertragung von Daten, z.B. Rechnerdaten, oder zur Femabfrage von Zählerdaten eingesetzt werden.

Di,e Erfindung gemäß Patentanspruch 1 umfasst demnach einen Empfänger für ein trägermoduliertes Signal, welches eine digitale Information enthält, mit:

- einer Demodulationseinrichtung, die an ihrem Ausgang zumindest ein zeitdiskretes Signal führt und
- einem der Demodulationseinrichtung nachgeschalteten Entscheidungsglied,

welche dadurch gekennzeichnet ist, dass das Entscheidungsglied einen Speicher zur Aufnahme einer Zuordnungs- oder ROM-Tabelle eines Ersatzkanals aufweist und derart ausgebildet ist, dass unter Berücksichtigung eines datenabhängigen Rauschanteils im zeitdiskreten Signal mittels Minimierung der Datenfehlerwahrscheinlichkeit von dem zeitdiskreten Signal die digitale Information ableitbar ist, dass eine Trellisstruktur gebildet ist, welche für die Übergänge in der Trellisstruktur eine Übergangswahrscheinlichkeit Pr geniäß der Beziehung

$$\mathrm{Pr}(k) = C \cdot \frac{1}{\sqrt{\upsilon^{(i)}}} \cdot e^{-\frac{\left(f(k) - f_d^{(i)}\right)^2}{2\upsilon^{(i)}}}$$

aufweist, worin k der Zeitindex, f das zeitdiskrete Signal, $f_d$ der Erwartungswert des für den jeweiligen Übergang erwarteten Ausgangssignals, $\upsilon$ die Varianz des Rauschens für den jeweiligen Übergang, i ein Index für den jeweiligen Übergang und C ein vorgebbarer zeitbezogener Faktor sind, dass die Demodulationseinrichtung zusätzlich einen AM-Demodulator umfasst und die zeitdiskreten Ausgangssignale des AM-Demodulators und des FM-Demodulators dem Entscheidungsglied als Information zugeführt sind, wobei die digitale Information von zumindest einem der Ausgangssignale abgeleitet ist und im Speicher eine in Abhängigkeit der digitale Information gemessene Varianz $\upsilon$ des Rauschens und/oder Farbigkeit des Rauschens gespeichert ist, dass das Entscheidungsglied als digitale Verarbeitungseinrichtung ausgebildet ist, welche den Speicher zur Aufnahme einer Zuordnungs- oder ROM-Tabelle und der Programme für den Betrieb sowie einen Microcomputer oder einen Rechner oder einen digitalen Signalprozessor aufweist und/oder dass das Entscheidungsglied einen Noise Predictor aufweist, welcher ein weiteres Entscheidungsglied aufweist, dem ausgangsseitig ein Modulator nachgeschaltet ist, dessen Ausgangssignal mittels einem Verknüpfungsglied von dem über ein Zeitglied zugeführten Eingangssignal subtrahiert wird und das dabei erzeugte Signal als Art Rauschsignal nach einer Filterung im Predictionfilter von dem dem weiteren Entscheidungsglied zugeführten Eingangssignal mittels einem weiteren Verknüpfungsglied subtrahiert wird.

Somit wird außer dem direkten FM-Signal auch ein weiteres, quasi eigentlich nicht zur Verfügung stehendes Sekundärsignal zum Empfang ausgenutzt.

Bei einer bevorzugten Ausgestaltung der Erfindung ist, gemäß Patentanspruch 2, der Trellisstruktur ein Viterbi-Algorithmus zugeordnet, der für die Übergangswahrscheinlichkeit eine Übergangsmetrik $\lambda_{zi}$ hat, die zwei Summanden Umfasst, wobei der eine Summand vom zeitdiskreten Signal abhängig und der andere Summand vom zeitdiskreten Signal unabhängig ist und dass die Übergangsmetrik $\lambda_{zi}$ gemäß der Beziehung

$$\lambda_{z_i} = \frac{1}{2\upsilon^{(i)}} \cdot \left(f(k) - f_d^{(i)}\right)^2 + \underbrace{\frac{1}{2}\ln\left(\upsilon^{(i)}\right)}_{const.}$$

ausgebildet ist.

Diese Ausgestaltung der Erfindung gemäß Patentanspruch 2 weist den Vorteil auf, dass auf dieser Basis eine verbesserte Kanalschätzung ermöglicht ist, die zu einem wesentlich verbessertem Empfang führt. Durch die Übergangsmetrik $\lambda_{zi}$ gemäß der Beziehung

$$\lambda_{z_i} = \frac{1}{2\upsilon^{(i)}} \cdot \left(f(k) - f_d^{(i)}\right)^2 + \underbrace{\frac{1}{2}\ln\left(\upsilon^{(i)}\right)}_{const.}$$

ist eine einfache Beziehung gegeben, die sich im Empfänger leicht realisieren lässt.

In Weiterbildung der Erfindung umfasst, gemäß Patentanspruch 3, der vom zeitdiskreten Signal abhängige Summand einen FM-Demodulator bezogenen Term und/oder einen AM-Demodulator bezogenen Term mit einer Zweigmetrik $\lambda^{(i)}$ gemäß der Beziehung

$$\lambda^{(i)}(k) = \frac{1}{2\upsilon_f^{(i)}}\left(f(k) - f_d^{(i)}\right)^2 + \frac{1}{2\upsilon_a^{(i)}}\left(a(k) - \bar{a}^{(i)}\right)^2 + \underbrace{\frac{1}{2}\ln\left(\upsilon_f^{(i)}\right) + \frac{1}{2}\ln\left(\upsilon_a^{(i)}\right)}_{const.}$$

worin a(k) das zeitdiskrete Ausgangssignal des AM-Demodulators, f(k) das zeitdiskrete Ausgangssignal des FM-Demodulators, $\upsilon_a$ die Varianz des Rauschens des AM-demodulierten Ausgangssignals für den jeweiligen Übergang, $\upsilon_f$ die Varianz des Rauschens des FM-demodulierten Ausgangssignals für den jeweiligen Übergang, $f_d$ der Erwartungswert des für den jeweiligen Übergang erwarteten Ausgangssignals des FM-Demodulators und $\bar{a}$ der Erwartungswert des für den jeweiligen Übergang erwarteten Ausgangssignals des AM-Demodulators sind und dass der vom zeitdiskreten Signal abhängige Summand einen Teilterm aufweist, der eine vorgegebene Rauschart berücksichtigt.

Diese Weiterbildung der Erfindung weist den Vorteil auf, dass sich die Beziehung besonders einfach gestaltet.

Erfindungsgemäß ist zur Lösung der Aufgabe ein Verfahren zum Bearbeiten eines trägermodulierten Signals nach Patentanspruch 4 vorgesehen, das eine zu übertragende digitale Information enthält,

- wobei das trägermodulierte Signal frequenzdemoduliert und zumindest ein zeitdiskretes Signal erzeugt wird, und
- wobei mittels Minimierung der Datenfehlerwahrscheinlichkeit von dem zeitdiskreten Signal die digitale Information abgeleitet wird,

welches dadurch gekennzeichnet ist, dass die digitale Information unter Berücksichtigung eines gespeicherten datenabhängigen Rauschanteils im zeitdiskreten Signal und einer Zuordnungstabelle eines Ersatzkanals erzeugt wird, dass das trägermodulierte Signal frequenz- und amplitudendemoduliert wird, dass die beiden dabei erzeugten zeitdiskreten Signale zur Ableitung der digitalen Information dienen; dass ein sender-, übertragungsweg- und/oder demodulatorbezogener Einfluss auf die zu übertragende digitale Information mittels einer Trellisstruktur nachgebildet wird und dass für die Übergänge in der Trellisstruktur eine Übergangswahrscheinlichkeit Pr gemäß der Beziehung

$$Pr(k) = C \cdot \frac{1}{\sqrt{\upsilon^{(i)}}} \cdot e^{-\frac{\left(f(k)-f_d^{(i)}\right)^2}{2\upsilon^{(i)}}}$$

verwendet wird, worin k der Zeitindex, f das zeitdiskrete Signal, $f_d$ der Erwartungswert des für den jeweiligen Übergang erwarteten Signals, $\upsilon$ die Varianz des Rauschens für den jeweiligen Übergang, i ein Index für den jeweiligen Übergang und C ein vorgebbarer zeitbezogener Faktor sind.

Somit ist eine wesentlich verbesserte Empfangseigenschaft gegeben, wobei auch bei besonders schlechten Empfangskonstellationen ein Empfang gewährleistet ist und wobei es günstig ist, wenn für die Übergänge in der Trellisstruktur eine Übergangswahrscheinlichkeit Pr gemäß der Beziehung

$$Pr(k) = C \cdot \frac{1}{\sqrt{\upsilon^{(i)}}} \cdot e^{-\frac{\left(f(k)-f_d^{(i)}\right)^2}{2\upsilon^{(i)}}}$$

verwendet wird.

In Weiterbildung der Erfindung wird, gemäß Patentanspruch 5, in der Trellisstruktur mit einem Viterbi-Algorithmus entschieden, der für die Übergangswahrscheinlichkeit mit einer Übergangsmetrik $\lambda_{zi}$ arbeitet, die zwei Summanden umfasst, wobei der eine Summand vom zeitdiskreten Signal (a(k), f(k)) abhängig und der andere Summand vom zeitdiskreten Signal (a(k), f(k)) unabhängig ist und dass die Übergangsmetrik $\lambda_{zi}$ gemäß der Beziehung

$$\lambda_{z,} = \frac{1}{2\upsilon^{(i)}} \cdot \left(f(k) - f_d^{(i)}\right)^2 + \underbrace{\frac{1}{2}\ln\left(\upsilon^{(i)}\right)}_{const.}$$

gebildet wird.

Diese Weiterbildung der Erfindung weist den Vorteil auf, dass sich die dafür benötigte Übergangsmetrik $\lambda_{zi}$ gemäß der Beziehung

$$\lambda_{z,} = \frac{1}{2\upsilon^{(i)}} \cdot \left(f(k) - f_d^{(i)}\right)^2 + \underbrace{\frac{1}{2}\ln\left(\upsilon^{(i)}\right)}_{const.}$$

besonders einfach gestaltet.

Bei einer bevorzugten Ausgestaltung der Erfindung umfasst, gemäß Patentanspruch 6, der vom zeitdiskreten Signal abhängige Summand einen auf das frequenzdemodulierte Ausgangssignal bezogenen Term und /oder einen auf das amplitudendemodulierte Ausgangssignal bezogenen Term, mit einer Zweigmetrik $\lambda^{(i)}$ gemäß der Beziehung

$$\lambda^{(i)}(k) = \frac{1}{2v_f^{(i)}}\left(f(k) - f_d^{(i)}\right)^2 + \frac{1}{2v_a^{(i)}}\left(a(k) - \bar{a}^{(i)}\right)^2 + \underbrace{\frac{1}{2}\ln\left(v_f^{(i)}\right) + \frac{1}{2}\ln\left(v_a^{(i)}\right)}_{const.}$$

:

worin a(k) das amplitudendemodulierte zeitdiskrete Ausgangssignal, f(k) das frequenzdemodulierte zeitdiskrete Ausgangssignal, $v_a$ die Varianz des Rauschens des amplitudendemodulierten zeitdiskreten Ausgangssignals für den jeweiligen Übergang, $v_f$ die Varianz des Rauschens des frequenzdemodulierten zeitdiskreten Ausgangssignals für den jeweiligen Übergang, $f_d$ der Erwartungswert des für den jeweiligen Übergang erwarteten frequenzdemodulierten zeitdiskreten Ausgangssignal und $\bar{a}$ der Erwartungswert des für den jeweiligen Übergang erwarteten amplitudendemodulierten zeitdiskreten Ausgangssignal sind und dass der vom zeitdiskreten Signal abhängige Summand einen Teilterm aufweist, mit welchem eine vorgegebene Rauschart berücksichtigt wird.

Diese Ausgestaltung der Erfindung gemäß Patentanspruch 6 weist den Vorteil auf, dass durch den Teilterm, mit welchem eine vorgegebene Rauschart berücksichtigt wird, verschiedenste Einflüsse des Übertragungswegs berücksichtigbar sind:

Ausführungsbeispiele der Erfindung, weitere Vorteile und Details werden nachfolgend anhand der Zeichnung näher erläutert. Es zeigen:

Fig. 1a    ein Blockschaltbild des neuen Empfängers,
Fig. 1b    eine weitere Ausführungsform des Empfängers gemäß Fig. 1a,
Fig. 2a    eine Prinzipdarstellung für einen Ersatzkanal,
Fig. 2b    einen weitere Ausführungsform für einen Ersatzkanal,
Fig.3      eine Prinzipdarstellung für das Zusammenwirken von neuem Empfänger und Ersatzkanal,
Fig. 4     eine Darstellung eines Trellisdiagramms für den Viterbidecoder,
Fig 5      ein Blockschaltbild eines DECT-Empfängers nach dem Stand der Technik.
Fig 6      ein Blockschaltbild eines Noise Predictors, und
Fig 7      ein Flussdiagramm zur Kanalschätzung.

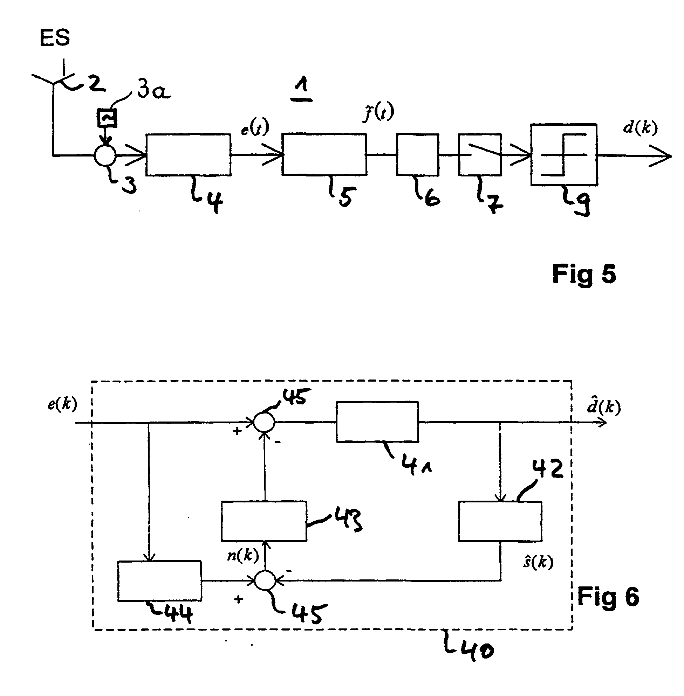

Nachfolgend wird anhand von Fig 5 zunächst ein DECT-Empfänger 1 erläutert, der als Standardempfänger bei DECT-Endgeräten Anwendung finden kann. Ein beispielsweise über eine Antenne 2 empfangenes Eingangssignal ES wird mit einem einstufigen Mischer 3 (mit Ozsillator 3a) gewandelt und nach einer Filterung in einem ZF-Filter 4 als Ausgangssignal e(t) an einen FM-Demodulator 5 gegeben. Das Ausgangssignal $f(t)$ des FM-Demodulators 5, das die Momentanfrequenz des Eingangssignals ES darstellt, wird im Symboltakt mittels einem Tastglied 7 abgetastet (Abtastwerte der Momentanfrequenz) und mit einem Schwellwertentscheider 9 in binäre Daten gewandelt. Die Reihenfolge von Tastglied 7 und Schwellwertentscheider 9 kann auch umgekehrt als dargestellt sein. Somit findet hier also eine Digitalisierung des Signals $f(t)$ statt.

Gegebenenfalls kann zwischen dem Tastglied 7 und dem FM-Demodulator 5 optional ein Nyquist-Filter 6 angeordnet sein. Ein optimales Nyquist-Filter realisiert die bestmögliche Begrenzung der Rauschbandbreite bei gleichzeitiger Elimination der bekannten Intersymbol-Interferenzen. Wird das Nyquist-Filter 6 für die Frequenzimpulsform entworfen, so werden die durch das Modulationsverfahren hervorgerufenen Intersymbol-Interferenzen zum Abtastzeitpunkt eliminiert. Die Berechnung und Anwendung des optimalen Nyquist-Filters ist dem Fachmann allgemein bekannt. Die Übertragungsfunktion eines optimalen Nyquist-Filters läßt ein farbiges Rauschen erwarten. Die Farbigkeit des Rauschens wird nachfolgend noch näher behandelt.

Um zu einen verbesserten Empfänger zu gelangen, ist das Wissen um den Übertragungskanal entscheidend. Vorliegend wurde hierzu zunächst ein Modell, nachfolgend als Ersatzkanal bezeichnet, erstellt. Die Bestimmung eines Ersatzkanals ist abhängig von der Definition seines Anfangs und seines Endes. So werden z.B. alle Umwelteinflüsse eines Mobilfunkkanals in einem Modell beschrieben, das an der Antenne des Senders beginnt und an der Antenne des Empfängers endet. Für die Entwicklung eines Empfängers ist es aber notwendig, eine Kanalbeschreibung zu haben, die alles umfaßt, was nicht beeinflußbar ist. Im vorliegenden Fall ist der Eingang des Ersatzkanals die Datenfolge am Eingang des DECT-Modulators und der Ausgang die Abtastwerte der Momentanfrequenz und die Abtastwerte der Amplitude.

Im Mobilfunk erhält ein Empfänger ein gesendetes Signal nicht nur auf dem direkten Weg, sondern auch über Reflexionen. Da die Weglänge der Signale über die Reflexion(en) länger ist als der direkte Pfad, entsteht eine Summe von zeitlich versetzten Einzelsignalen. Dies entspricht einer linearen Verzerrung des Sendesignals mit endlicher Einflußlänge. Da die Dauer eines Bursts kleiner als 1 ms und die Bewegungsgeschwindigkeit eines DECT-Empfängers gering ist, wird im weiteren davon ausgegangen, daß die linearen Verzerrungen des Kanals während eines Bursts zeitinvariant sind.

Bei dem vorliegend verwendeten, als Mehrwegkanal ausgebildeten Ersatzkanal wurde von der Randbedingung ausgegangen, daß Laufzeitunterschiede von mehr als einer Symboldauer nicht betrachtet werden müssen. Der entwickelte Ersatzkanal wurde im übrigen mit einem Simulationsmodell für die DECT-Übertragung an einem Rechner überprüft. Der Ersatzkanal wird dabei prinzipiell in einen deterministischen Teil $f_d(k)$ und eine additive Störung $n(k)$ zerlegt. Die jeweiligen Abtastwerte ergeben sich dann zu:

$$f(k) = f_d(k) + n(k).$$

Untersuchungen an dem Simulationsmodell haben gezeigt, daß das Rauschen $n(k)$ abhängig von den übertragenen Daten ist. In dem Modell für den Ersatzkanal wird dies berücksichtigt. Im Empfänger sollte daher also auch das Rauschen bewertet oder zur Auswertung herangezogen werden. Als weitere Erkenntnis wurde festgestellt, daß bei bestimmten Empfangskonstellationen bei einem frequenzmodulierten Sendesignal die zu übertragende Information beim empfangenen Signal anstatt in der Frequenz in der Amplitude enthalten ist. Durch den Übertragungskanal kann also die Amplitude des Empfangssignals Informationen über die übertragenen Daten enthalten. Deshalb sollte ggf. auch die Amplitude eines empfangenen Signals ausgewertet werden. Dies kann beispielsweise durch einen zusätzlichen AM-Demodulator im Empfänger erfolgen.

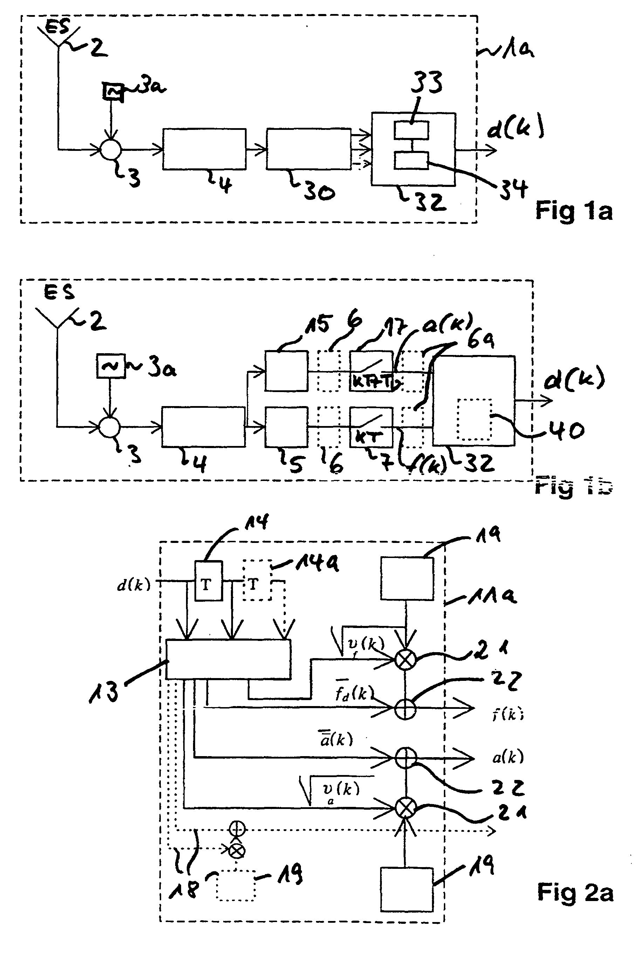

Der in Fig 2a gezeigte Ersatzkanal 11a ist das Ergebnis der Untersuchungen am Modell für den Spezialfall einer Anwendung, insbesondere einer DECT-Anwendung, bei der ein AM-Demodulator und ein FM-Demodulator zur Anwendung kommen. Diese werden später noch anhand von Fig 1b näher erläutert. Er erzeugt oder beschreibt die Abtastwerte f(k) und a(k) in Abhängigkeit der Daten d(k) für den FM-Demodulator bzw. den AM-Demodulator. Der Ersatzkanal 11a hat durch die begrenzte Einflußlänge der Mehrwegespreitzung endlich viele Zustände. Werden nun Erwartungswerte $E\{f(k)\}$ und $E\{a(k)\}$ in einer Zuordnugstabelle, beispielsweise in einem Speicher als ROM-Tabelle 13, abgelegt und abhängig vom Zustand des Ersatzkanals 11a ausgegeben, so sind für den rauschfreien Fall alle möglichen, nichtlinearen Verzerrungen berücksichtigt. Mit dem Zeitglied 14 werden Einflüsse von zeitlich späteren Reflexionen berücksichtigt.

Gegebenenfalls können zur Berücksichtigung längerer Einflüsse auf den Übertragungskanal weitere Zeitglieder 14a usw. Vorgesehen sein. Mit den gestrichelten Linien 18 sei angedeutet, dass ggf. auch weitere Informationen von weiteren Demodulatoren oder Informationsquellen berücksichtigt werden können.

Für das Rauschen, das nach dem FM-Demodulator farbig und nach dem AM-Demodulator nicht gaußförmig verteilt ist, wird in einem ersten Ansatz ein weißes Gaußsches Rauschen von Rauschquellen 19 mit einer Rauschleistung, die vom Zustand des Ersatzkanals 11a abhängt, angenommen. Die vom Zustand abhängige Varianz v des Rauschens wird ebenfalls in der ROM-Tabelle 13 abgelegt. Der Inhalt dieser ROM-Tabelle 13 wird durch Kanalschätzung bestimmt, die hier als ideal angenommen wird. Auf die Kanalschätzung wird später noch eingegangen. Für das Modell gemäß Fig 2a wird eine Einflußlänge von einer Symboldauer angenommen. Eine Erweiterung für mehrere Zustände ist unmittelbar möglich. Das Rauschen wird bei dem Ersatzkanal 11a für die zu erzeugenden Abtastwerte $f(k)$ und $a$ $(k)$ für jeden Verarbeitungszweig mit der Quadratwurzel der jeweiligen Varianz v(k) multipliziert und zu dem jeweiligen Erwartungswert $\bar{f}_d(k)$ bzw. $\bar{a}(k)$ addiert. Hierzu sind Multiplizierglieder 21 und Addierglieder 22 vorgesehen.

In Simulationen mit dem kompletten Übertragungssystem als Modell für die Mehrwegeausbreitung wurden die Werte der ROM-Tabelle 13 für jeden zeitinvarianten Mobilfunkkanal durch eine ausreichend lange Messung zustandsabhängig ermittelt.

Die mit dem weißen Gaußschen Rauschen erzeugte Störung $n(k)$ weist eine Varianz auf, die vom Übertragungskanal, aber auch von den Daten abhängt. Die Varianz des Rauschens wird in Abhängigkeit der Daten gemessen und in der ROM-Tabelle 13 abgelegt. Die Eintragungen in der ROM-Tabelle 13 sind z.B. im vorliegenden Fall: $f_d^{(1)}, f_d^{(2)}, f_d^{(3)} f_d^{(4)}$ und $\upsilon^{(1)}, \upsilon^{(3)}, \upsilon^{(3)}, \upsilon^{(4)}$

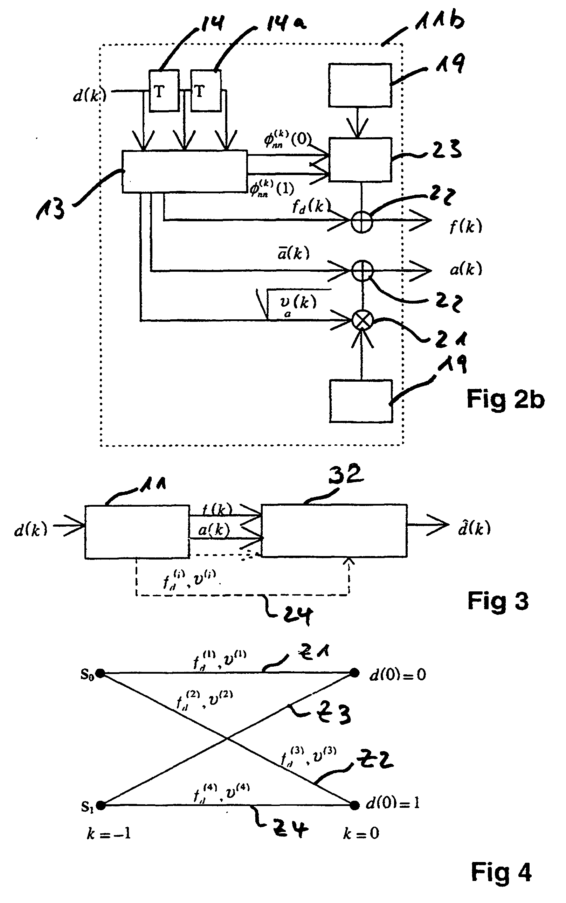

Diese Eintragungen werden durch die Kanalschätzung ermittelt und stehen für eine Auswertung in einem Detektor oder Empfänger zur Verfügung. Diese Werte sind im Trellisdiagramm, wie in FIG 4 gezeigt, eindeutig den einzelnen Zweigen 21 bis 24 zugeordnet.

Fig 2b zeigt eine weitere Ausführungform eines Ersatzkanals 11b der farbiges Rauschen berücksichtigt. Durch die Einbeziehung der Mehrwegeausbreitung in das Modell ändert sich die Farbigkeit des Rauschens und wird abhängig von den Daten. Um einen Farbfilter vom Grad 1 ausreichend bestimmen zu können, müssen 8 Zustände im Ersatzkanal 11b betrachtet werden. An der Generierung des Signals a(k) wird gegenüber Fig 2a nichts geändert. Da 8 Zustände in der ROM-Tabelle 13 gespeichert werden müssen, ist das durch die Zeitglieder 14 und 14a repräsentierte Kanalgedächtnis des Übertragungskanals um ein Symbol entsprechend dem Zeitglied 14a verlängert. Die Varianzen und Mittelwerte, welche durch 4 Zustände beschrieben werden, sind dann in der ROM-Tabelle 13 doppelt abgelegt, so daß die Verlängerung des Kanalgedächtnisses auf diese Werte keinen Einfluß hat.

Zusätzlich ist bei dieser Ausführungsform ein Farbfilter 23 vorgesehen, dem die Werte $\phi_{nn}^{(k)}(0)$ und $\phi_{nn}^{(k)}(1)$ der

Autokorrelationsfunktion (AKF) zugeführt sind. Diese werden zur Berechnung der Filterkoeffizienten benötigt. Da die Werte für $\phi_{nn}^{(i)}(0)$ gleich den Varianzen $\upsilon_f^{(i)}$ sind, die schon in der ROM-Tabelle 13 abgelegt sind, sind in der ROM-Tabelle nur die Werte für $\phi^{(i'i')}(1)$ neu. Die Angabe einer Realisierung für das Farbfilter 23 ist nicht notwendig, da es sich hier nur um ein Modell handelt und das Filter durch die Angabe der Systemkorrelierten $\varphi_{nn}^{(i'i')}(\kappa)$ bestimmt ist. Diese ergibt sich zu:

$$\phi_{nn}^{(i,i')}(\kappa) = \varphi_{nn}^{(i,i')}(\kappa) * \delta(\kappa) = \varphi_{nn}^{(i,j')}(\kappa) \qquad (6\text{-}11)$$

Die Autokorrelationsfunktion von weißem Gaußschen Rauschen ist die Dirac-Funktion $\delta(\kappa)$. Damit ist die Systemkorrelierte $\varphi_{nn}^{(i,j')}(\kappa)$ des Farbfilters 23 gleich der AKF $\phi^{(i,j')}(\kappa)$ des Rauschens.

Fig 3 zeigt eine Prinzipdarstellung für die weitere Verfahrensweise. Zur weiteren Verarbeitung der mit einem Ersatzkanal 11 (beispielhaft für die oben beschriebenen Ersatzkanäle) gewonnen Informationen wird ein Detektor 32 mit einem Trellis-Entzerrer für datenabhängige Rauschleistung verwendet, wobei die Ausgangssignale des Ersatzkanals 11 nach den Maximum-Likelihood-Kriterien entschieden werden. Der Ersatzkanal 11 kann wie bereits oben erwähnt beliebig viele Ausgangsinformationen haben. Die ROM-Tabelle 13 des Ersatzkanals 11 steht dem Detektor 32 als Nebeninformation (entsprechend der strichlierten Linie 24) zur Verfügung.

Die Fig 3 zeigt hier also quasi eine Anordnung zur Erprobung des neuen Detektors 32 mit dem Ersatzkanal 11. In der Praxis ist dann der Ersatzkanal 11 durch die reele Umgebung gegeben, wobei dem Detektor 32 vorab die vorab gewonnen Informationen aus der ROM-Tabelle 13 zuführt wurden.

Durch die endliche Zustandszahl des Kanals ist vorliegend eine trellisbasierte Entzerrung mit dem Viterbi-Algorithmus vorgesehen. Ist die berücksichtigte Einflußlänge des Kanals nur eine Symboldauer, so kann ein derartiger Detektor auch als 2-State Viterbi-Detektor bezeichnet werden. Die Metrik für den Algorithmus muß an die Besonderheiten des jeweiligen Ersatzkanals angepaßt werden. Das vereinfachte Modell für einen Kanal kann in einem Trellisdiagramm gemäß Fig 4 dargestellt werden. Eine Trellis-Entzerrung und der Viterbi- Algorithmus sind allgemein aus dem Stand der Technik bekannt. Es wird zum Verständnis daher zunächst nur kurz anhand von Fig 4 hierzu eingegangen. Es schließt sich eine Herleitung für eine entsprechende Metrik für den vorliegenden Anwendungsfall an.

Das Kanalgedächtnis hat eine Länge von L = 1. Das Symbolalphabet ist binär und hat damit M = 2 Symbole. Daraus ergibt sich für das Trellisdiagramm $M^L = 2$ Zustände, weshalb ein Viterbi-Algorithmus, der auf diesem Trellisdiagramm basiert, 2-State Viterbi genannt wird.

Der Kanal befindet sich in dem Zustand So, wenn $d(-1) = 0$ war, sonst in dem Zustand S1. Von jedem Zustand des Kanals aus sind M Übergänge zu einem neuen Zustand möglich. Es gibt damit $M*M^L = 4$ Übergänge

$$\{Z_1, Z_2, Z_3, Z_4\}$$

zu einem neuen Zustand. Jeder dieser möglichen Übergänge wird durch einen Erwartungswert für $f(k)$ und eine Varianz $\upsilon(k)$ für das Rauschen charakterisiert. Als Beispiel sind hier der Erwartungswert und die Varianz von $f(k)$ für den Übergang $Z_1$ angegeben.

$$E\{f(k)|Z_1\} = f_d^{(1)} \qquad (4\text{-}1)$$

$$E\{|f(k) - f_d^{(1)}|^2 \,|\, Z_1\} = \upsilon^{(1)} \qquad (4\text{-}2)$$

Fig 4 stellt die Übergänge bei der Übertragung von einem Symbol dar. Werden mehrere Symbole übertragen, muß diese Darstellung in einem gegenüber Fig 4 längerem Trellisdiagramm fortgesetzt werden. Die Daten bestimmen, wie in Fig 4 dargestellt, genau einen Pfad durch dieses Trellisdiagramm.

Kennzeichen eines Trellisdiagramms ist es, daß die Einflüsse aus der Vergangenheit in dem Zustand abgebildet sind. Dies wird für den vorliegenden Anwenungfall vorteilhaft genutzt und bedeutet, daß die Kenntnis über den Weg, wie man zu dem Zustand gekommen ist; keine zusätzliche Information über den Weg nach dem Zustand enthält. Für 5 übertragene Symbole existieren $M^5 = 2^5 = 32$ mögliche Pfade durch das Trellisdiagramm, wobei nur ein Pfad der richtige ist. Dieser muß gefunden werden. Der Viterbi-Algorithmus sucht den wahrscheinlichsten Pfad durch das Trellisdiagramm, wodurch die Wortfehlerwahrscheinlichkeit minimiert wird.

Der Viterbi-Algorithmus macht dies, indem er am Eingang eines Zustandes nur den einen Pfad überleben läßt, der die größte Wahrscheinlichkeit besitzt. Dazu werden, ausgehend von allen Zuständen, die Wahrscheinlichkeiten der möglichen Übergänge berechnet, diese mit den Wahrscheinlichkeiten der Ausgangszustände $S'_x$ multipliziert und dann am Eingang eines neuen Zustands verglichen. So existiert für jeden neuen Zustand genau ein überlebender Pfad. Die Zahl der noch möglichen Pfade durch das Trellisdiagramm ist gleich der Zahl der Zustände und der exponentielle Anstieg der möglichen Pfade ist hiermit durchbrochen. Sind diese noch möglichen Pfade einmal durch einen gemeinsamen Zustand gegangen, so kann der Weg bis zu diesem gemeinsamen Zustand als geschätzte Daten ausgegeben werden.

Die Wahrscheinlichkeit eines Zustands $S_x$ wird bei einem Viterbi-Algorithmus nicht genau berechnet, weshalb auch keine Wahrscheinlichkeit für die einzelnen Datensymbole angegeben werden kann. Als neue Zustandswahrscheinlichkeit wird die Wahrscheinlichkeit des überlebenden Pfades angenommen.

$$\Pr\{\mathbf{S}_x\} = N \cdot \Pr\{\mathbf{S}'_x\} \cdot \Pr\{\mathbf{Z}_i \big| f(k), \text{überlebt}\}$$

$$(4-3)$$

Für jeden Empfangswert $f(k)$ muß für alle Übergänge

$$\{\mathbf{Z}_1, \mathbf{Z}_2, \mathbf{Z}_3, \mathbf{Z}_4\}$$

die Wahrscheinlichkeit berechnet werden. Der Erwartungswert $f^{(i)}_d$, wie auch die Varianz $\upsilon_i$ des weißen Gaußschen Rauschens ist durch die Kanalschätzung für jeden Übergang bekannt. Damit ergibt sich für jeden Übergang $Z_i$ eine Wahrscheinlichkeitsdichtefunktion $p_i(f(k))$.

$$\mathrm{p}_i\big(f(k)\big) = \frac{1}{\sqrt{2\pi\,\upsilon^{(i)}}} \cdot e^{\frac{\left(f(k) - f_d^{(i)}\right)}{2\upsilon^{(i)}}} \qquad \text{mit} \quad i \in \{1, 2, 3, 4\} \qquad (4-4)$$

Aus diesen Wahrscheinlichkeitsdichtefunktionen kann nun die Wahrscheinlichkeit für den Übergang $\mathbf{Z}_i$ berechnet werden.

$$\Pr\{\mathbf{Z}_i \big| f(k)\} = \frac{\mathrm{p}_i\big(f(k)\big)}{\mathrm{p}_1\big(f(k)\big) + \mathrm{p}_2\big(f(k)\big) + \mathrm{p}_3\big(f(k)\big) + \mathrm{p}_4\big(f(k)\big)} \qquad (4-5)$$

Wird nun die Formel 4-4 in 4-5 eingesetzt und vereinfacht, so ergibt sich:

$$\Pr\left\{\mathbf{Z}_i \middle| f(k)\right\} =$$

$$\frac{\dfrac{1}{\sqrt{\upsilon^{(i)}}}\cdot e^{-\frac{\left(f(k)-f_d^{(i)}\right)^2}{2\upsilon^{(i)}}}}{\dfrac{1}{\sqrt{\upsilon^{(1)}}}\cdot e^{-\frac{\left(f(k)-f_d^{(1)}\right)^2}{2\upsilon^{(1)}}} + \dfrac{1}{\sqrt{\upsilon^{(2)}}}\cdot e^{-\frac{\left(f(k)-f_d^{(2)}\right)^2}{2\upsilon^{(2)}}} + \dfrac{1}{\sqrt{\upsilon^{(3)}}}\cdot e^{-\frac{\left(f(k)-f_d^{(3)}\right)^2}{2\upsilon^{(3)}}} + \dfrac{1}{\sqrt{\upsilon^{(4)}}}\cdot e^{-\frac{\left(f(k)-f_d^{(4)}\right)^2}{2\upsilon^{(4)}}}}$$

$$(4-6)$$

Da der Aufwand, für jedes empfangene Symbol diese Formel vier mal zu berechnen, zu groß ist, müssen Vereinfachungen gefunden werden, die keinen Einfluß auf die Entscheidungen besitzen. Der Nenner der Formel 4-6 ist für alle Übergänge gleich und damit nicht abhängig von dem Übergang $\mathbf{Z}_i$ der gerade berechnet wird. Da der überlebende Pfad durch einen Vergleich bestimmt wird, hat der Nenner keinen Einfluß auf die Entscheidung. Der Nenner, der vernachlässigt werden kann, wird in der Funktion

$$C\big(f(k)\big)$$

zusammengefaßt.

$$\Pr\left\{\mathbf{Z}_i \middle| f(k)\right\} = C\big(f(k)\big)\cdot \frac{1}{\sqrt{\upsilon^{(i)}}}\cdot e^{-\frac{\left(f(k)-f_d^{(i)}\right)^2}{2\upsilon^{(i)}}}$$

$$(4-7)$$

Um die Berechnung dieser Gleichung noch weiter zu vereinfachen, wird diese mit einer Vorschrift transformiert, die auf den Vergleich keinen Einfluß hat. Prinzipiell kann für die Transformation jede streng monotone Funktion verwendet werden. Die Kenngröße für die Entscheidung wird nach der Transformation Metrik genannt. Die bei dem Viterbi-Algorithmus verwendete Transformationsfunktion ergibt für die Wahrscheinlichkeiten die folgenden Metriken:

$$\lambda_i = -\ln\left(\Pr\left\{\mathbf{Z}_i \middle| f(k)\right\}\cdot \Pr\left\{\mathbf{S}_x\right\}\right)$$

$$(4-8)$$

$$\lambda_i = -\ln\left(\Pr\left\{\mathbf{Z}_i \middle| f(k)\right\}\right) - \ln\left(\Pr\left\{\mathbf{S}_x\right\}\right)$$

$$(4-9)$$

$$\lambda_i = \lambda_{Z_i} + \lambda_{S_x}$$

$$(4\text{-}10)$$

Da die Transformationsfunktion monoton fallend ist, wird im Algorithmus zugunsten des Pfades entschieden, welcher die kleinere Metrik $\lambda_i$ besitzt. Die Zustandsmetrik $\lambda_{S_x}$ ist die Metrik des überlebenden Pfades und wird aus der Summe von der Vorzustandsmetrik $\lambda_{S'_x}$ und der Übergangsmetrik $\lambda_{Z_i}$ gebildet.

$$\lambda_{S_x} = \lambda_i = \lambda_{Z_i} + \lambda_{S'_x}.$$

$$(4\text{-}11)$$

Da Anteile, die für alle Pfade gleich sind, keinen Einfluß auf die Entscheidung haben und deshalb vernachlässigt werden können, kann eine beliebige Konstante von allen Zustandsmetriken, wenn diese zu groß werden, abgezogen werden, ohne daß dies die Entscheidung beeinflußt. Die Metrik für die Übergangswahrscheinlichkeit berechnet sich aus der Gleichung 4-7 wie folgt.

$$\lambda_{\mathbf{z}_i} = -\ln\left( \Pr\left\{ \mathbf{Z}_i \big| f(k) \right\} \right) \tag{4-12}$$

$$\tilde{\lambda}_{\mathbf{z}_i} = -\ln\left( \underbrace{C(f(k))}_{\text{ohne Einfluß}} \cdot \frac{1}{\sqrt{\upsilon^{(i)}}} \cdot e^{-\frac{(f(k)-f_d)^2}{2\upsilon^{(i)}}} \right) \tag{4-13}$$

$$\lambda_{\mathbf{z}_i} = \frac{1}{2\upsilon^{(i)}} \cdot \left( f(k) - f_d^{(i)} \right)^2 + \underbrace{\frac{1}{2}\ln\left(\upsilon^{(i)}\right)}_{\text{const.}} \tag{4-14}$$

Der vordere Teil der Gleichung ist die Distanz zwischen dem empfangenen Wert und dem Erwartungswert für diesen Übergang. Diese Distanz wird noch mit der vom Zustand abhängigen Varianz der Rauschleistung skaliert. Der zweite Teil ist eine von der Varianz der Rauschleistung abhängige Konstante, die für jeden Übergang unterschiedlich sein und deshalb nicht vernachlässigt wird.

Ist die Varianz $\upsilon^{(i)}$ für alle Übergänge Zi gleich und damit unabhängig von dem Zustand des Kanals, so ist der zweite Teil der Gleichung 4-14 für alle Übergänge gleich und kann vernachlässigt werden. Wird auch die Skalierung, welche für jeden Übergang dann gleich ist und keinen Einfluß mehr hat, vernachlässigt, reduziert sich diese Metrik auf die reine Distanzmetrik des original Viterbi-Algorithmuses. Der hier vorgeschlagene Trellis-Entzerrer für datenabhängige Rauschleistung verbessert für viele Kanäle die Leistungseffizienz deutlich, wie sich in Versuchen gezeigt hat.

In den bereits oben erwähnten Versuchen wurde festgestellt, dass durch eine zusätzliche Entscheidung oder Auswertung des Empfangssignals mit den oben angegebenen Mitteln die ursprünglichen Daten wiedergewonnen werden können, wobei bevorzugt die Frequenz- und die Amplitudeninformation genutzt werden muss.

Wenn die Signale f(k) und a(k) stochastisch unabhängig sind, ist die Verbundwahrscheinlichkeit die Multiplikation der Einzelwahrscheinlichkeiten. Durch die Transformation entspricht dies einer Addition der Metriken.

$$\lambda^{(i)}(k) = \lambda_f^{(i)}(k) + \lambda_a^{(i)}(k) \qquad i \in \{1,2,3,4\} \tag{5-2}$$

Der Index i kennzeichnet dabei die 4 möglichen Übergänge im Trellisdiagramm. Die Metrik $\lambda_f^{(i)}(k)$ wurde oben hergeleitet und ist durch die Gleichung 4-14 gegeben. Sie wird hier mit der angepaßten Nomenklatur noch einmal angegeben.

$$\lambda_f^{(i)}(k) = \frac{1}{2\upsilon_f^{(i)}} \left( f(k) - f_d^{(i)} \right)^2 + \underbrace{\frac{1}{2}\ln\left(\upsilon_f^{(i)}\right)}_{\text{const.}} \tag{5-3}$$

Da für beide Signale die Struktur im Ersatzkanal gleich ist, wird auch eine identische Konstruktion für die Metrik des Amplitudensignals verwendet. Damit kann aus der Gleichung 5-3 die Metrik $\lambda_a^{(i)}(k)$ angegeben werden.

$$\lambda_a^{(i)}(k) = \frac{1}{2\upsilon_a^{(i)}} \left( a(k) - \bar{a}^{(i)} \right)^2 + \underbrace{\frac{1}{2}\ln\left(\upsilon_a^{(i)}\right)}_{\text{const.}} \tag{5-4}$$

Werden nun die Gleichungen 5-3 und 5-4 in die Gleichung 5-2 eingesetzt, ergibt sich für die Zweigmetrik:

$$\lambda^{(i)}(k) = \frac{1}{2\upsilon_f^{(i)}}\left(f(k) - f_d^{(i)}\right)^2 + \frac{1}{2\upsilon_a^{(i)}}\left(a(k) - \bar{a}^{(i)}\right)^2 + \underbrace{\frac{1}{2}\ln\left(\upsilon_f^{(i)}\right) + \frac{1}{2}\ln\left(\upsilon_a^{(i)}\right)}_{const.} \qquad (5-5)$$

Da die Signale f(k) und a(k) stark unterschiedliche Rauschleistungen haben können, wird eine Normierung der Rauschleistung durch die Skalierung der Distanzen vorgesehen. Da die Skalierung der Distanzen abhängig von dem betrachteten Übergang ist, wird der Signalraum verzerrt. Diese Verzerrung wird durch die Addition von Konstanten, die damit für die einzelnen Übergänge unterschiedlich sein müssen, kompensiert. Diese Konstanten wurden bereits oben aus den Wahrscheinlichkeiten hergeleitet.

Die oben beschriebene Ausführung zur Trellis-Entzerrung gilt beispielhaft für den vorliegenden Spezialfall eines Empfängers mit 2 Demodulatoren, binären Übertragungsdaten und einem Kanalgedächtnis von nur einem Zustand. Selbstverständlich sind auch weitere Ausführungen, z.B. mit weiteren Demodulatoren, anderen wertediskreten Daten und einem längeren Kanalgedächtnis möglich.

Ausgehend von den Erkenntnissen, die mit den entwickelten Ersatzkanälen gewonnen wurden, konnte ein neuer Empfänger 1a gemäß Fig 1 erstellt werden. Dieser weist in Abweichung zum Empfänger 1 gemäß Fig 5 eine Demodulationseinrichtung 30 auf, die zumindest zwei oder noch mehr zeitdiskrete Ausgangssignale gemäß den obigen Erkenntnissen führt und ggf. einen oder auch mehrere Demodulatoren aufweisen kann, die ggf. über verschiedene Quellen, also nicht unbedingt über die Antenne 2, gespeist werden können. Diese werden dann im nachfolgenden Detektor 32 ausgewertet und können z.B. das FM-Signal und weitere Signale im obigen Sinn - also quasi Sekundärsignale oder -Informationen - sein. Der Detektor 32 entscheidet die empfangenen Daten bevorzugt mit Hilfe einer Trellisstruktur, wobei ggf. der oben beschriebene Viterbi-Algorithmus zur Anwendung kommen kann. Der Detektor 32 dient hier also als Entscheidungsglied. Der Detektor 32 macht dabei von den im Ersatzkanal 11, 11a bzw. 11b gewonnen Erkenntnissen und der Kanalschätzung zur Beurteilung des Übertragungsweges Gebrauch und nutzt diese zur Entscheidung der Daten.

Basierend auf diesen Erkenntnissen werden dabei mit Hilfe zeitlich vorher empfangenen Daten neu empfangene Daten auf ihre Wahrscheinlichkeit hin überprüft und entschieden. Mit anderen Worten: In dem Detektor 32 wird unter Berücksichtigung eines datenabhängigen Rauschanteils im zeitdiskreten Signal mittels Minimierung der Datenfehlerwahrscheinlichkeit die digitale Information gewonnen. Dabei kann es sogar zu Situationen kommen, bei denen die gewünschte Information nicht im ursprünglichen FM-Signal, sondern quasi in einem Sekundärsignal enthalten ist oder basierend auf diesem Sekundärsignal die Entscheidung für einen Datenwert getroffen wird.

Der Detektor 32 kann bevorzugt als digitale Verarbeitungseinrichtung ausgebildet sein, wozu er beispielhaft einen Microcomputer, einen Rechner oder einen digitalen Signalprozessor 33 aufweisen kann. Diesem ist dann bevorzugt zumindest ein Speicher 34 zur Aufnahme der Zuordnungs- oder ROM-Tabelle und der entsprechenden Programme für den Betrieb zugeordnet. Selbstverständlich ist auch eine Ausführung des Empfängers 1a auch in Hardware-Technik möglich. Bevorzugt wird der Detektor 32 und ggf. auch weitere oder alle Bauteile des Empfängers 1a als integriertes Bauteil, z.B. einem Chip oder Asic, ausgeführt, das dann in weitere elektronische Geräte, z.B. einem Elektrizitätszähler oder einem schnurlosen Telefon, integriert werden kann.

Fig 1b zeigt basierend auf Fig 1a eine bevorzugte Ausführungsform, die mit Vorteil z.B. für einen DECT-Empfänger oder auch für eine PLC-Anwendung geeignet ist. Der gezeigte Empfänger 1b weist nach dem ZF-Filter 4 zwei Verarbeitungszweige auf. Der eine entspricht im wesentlichen dem bisherigen FM-Kanal des bekannten Empfängers gemäß Fig 5.

Zusätzlich ist hier - obwohl ein FM-Signal verarbeitet werden soll - ein AM-Kanal vorgesehen. Dieser weist einen Hüllkurven- oder AM-Demodulator 15 auf, dem ein weiteres Tastglied 17 nachgeschaltet ist. Die Abtastung des Signals im AM-Kanal kann gegenüber dem FM-Kanal zeitlich verzögert erfolgen. Hierzu wird später noch näher eingegangen. Diese Verzögerung kann ggf. auch durch andere Mittel, z.B. durch eine Zwischenspeicherung der Daten erzielt werden.

Die so erzeugten Signale a(k) und f(k) werden dann nachfolgend dem als Entscheidungsglied dienenden Detektor 32 zugeführt. Ggf. können optional für jeden Verarbeitungszweig z.B. ein Nyquist-Filter 6 und/oder sonstige Filter 6a, z.B. Bandbegrenzer oder Filter zur Rauschleistungsminimierung vorgesehen sein. Bevorzugt für den FM-Zweig kann optional ein Noise Predictor 40 vorgesehen sein, mit dem eine weitere Verbesserung des Empfangs ermöglicht ist. Hierauf wird nachfolgend eingegangen.

Wie dem Fachmann allgemein bekannt, hat eine Störung nach einem FM-Diskriminator eine starke Färbung, womit in dem Rauschen Redundanz vorhanden ist. Wird diese Redundanz genutzt, kann die Leistung des Rauschens minimiert werden. Nachfolgend wird beschrieben, wie es mit einfachen Maßnahmen möglich ist, bei einem inkohärenten Empfänger im AWGN-(Additive White Gaussian Noise) Kanal fast die Leistungseffizienz eines kohärenten Empfängers zu erreichen.

Ein bekanntes Verfahren, Rauschleistung zu verringern, ist die sogenannte Noise Prediction, welche eine lineare Prädiktion zur Vorhersage des Rauschens enthält. Vorteil dieses Verfahrens gegenüber einem Noise Whitening ist, daß es nur Einfluß auf das Rauschen hat und damit keine weiteren Intersymbol-Interferenzen erzeugt. Prinzipiell kann dieses Verfahren in ein Verfahren in Noise Whitening und anschließender DFE (Decision Feedback Equalization) überführt werden.

In Fig 6 ist der prinzipielle Aufbau eines Noise Predictors 40 dargestellt, wie er abgewandelt ggf. im Detektor 32 gemäß Fig 1a und 1b zur Anwendung kommen kann. Dem Noise Predictors 40 wird allgemein ein Empfangssignal e(k) zugeführt. Der Noise Predictor 40 weist ein Entscheidungsglied 41 auf, dem ausgangsseitig ein Modulator 42 nachgeschaltet ist. Dessen Ausgangssignal $s(k)$ wird mittels einem Verknüpfungsglied 45 von dem über ein Zeitglied 44 geführte Empfangssignal e(k) subtrahiert. Das dabei erzeugte Signal kann als Rauschen n(k) bezeichnet werden und wird nach einer Filterung im Predictionfilter 43 von dem dem Entscheidungsglied 41 zugeführten Eingangssignal e(k) mittels einem weiteren Verknüpfungsglied 45 subtrahiert. Hierzu wird angenommen, daß jedes Empfangssymbol sofort entschieden wird.

Zur Bestimmung des Rauschens n(k) muß das Sendesignal s(k) von dem Empfangssignal e(k) abgezogen werden. Da das Sendesignal im Empfänger nicht zur Verfügung steht, wird aus den entschiedenen Daten $d(k)$ das dazu gehörige Sendesignal $s(k)$ nachgebildet und von dem Empfangssignal e(k) abgezogen.

$$n(k) = e(k) - \hat{s}(k) \tag{6-1}$$

Da das Rauschen n(k) erst nach der Entscheidung von e(k) zur Verfügung steht, kann diese Information nur für nachfolgende Empfangswerte verwendet werden. Dazu wird das Rauschen im Prädiktionsfilter 43 bewertet und von den nachfolgenden Empfangswerten abgezogen. Das Prädiktionsfilter 43 mit der Funktion $H_p(z)$ wird als FIR-Filter vom Grad P gemäß der nachfolgenden Beziehung realisiert.

$$H_p(z) = h(0) + h(1) \cdot z^{-1} + h(2) \cdot z^{-2} + ... + h(P) \cdot z^{-P} \tag{6-2}$$

Wie in Versuchen festgestellt wurde, ist durch eine Noise Prediction mit dem Grad 1 eines äquivalenten Whitening-Filters in der Leistungseffizienz ein Gewinn von mehr als 2 dB zu erzielen. Durch eine Erhöhung des Filtergrades werden keine wesentlichen Verbesserungen erzielt. Aufgrund dieses Ergebnisses wird bevorzugt im eine Noise Prediction mit dem Filtergrad 1 verwendet.

Der Grad 1 eines äquivalenten Whitening-Filters bewirkt für das Prädiktionsfilter 43 einen Filtergrad von P=0. Dieses Filter, das sich auf eine Verstärkung reduziert, hat nur den Koeffizienten h(0), der durch die Yule-Walker-Gleichungen wie folgt gegeben ist:

$$h(0) \cdot \phi_{nn}(0) = \phi_{nn}(1) \tag{6-5}$$

Nach dem Koeffizienten aufgelöst ergibt dies:

$$h(0) = \frac{\phi_{nn}(1)}{\phi_{nn}(0)} \tag{6-6}$$

Der Nenner $\phi_{nn}(0)$ ist die Leistung des Rauschens und entfällt bei einer auf die Leistung normierten AKF.

Bei einem Mehrwegekanal ist das Rauschen von dem Zustand des Kanals abhängig und damit zeitvariant. Natürlich ist auch die Farbigkeit des Rauschens dann vom Zustand des Kanals abhängig und zeitvariant. Da ein auf die Farbigkeit des Rauschens falsch angepaßtes Prädiktionsfilter die Leistungseffizienz der Übertragung sogar verschlechtern kann, muß die Noise Prediction in Abhängigkeit des Kanals gestaltet und für jeden Zweig im Trellis-Diagram ein eigenes Prädiktionsfilter - einmalig nach der Kanalschätzung - berechnet werden. Hinzu kommt, daß bei einer Trellis-Entzerrung die Empfangssignale nicht sofort entschieden werden und so das Rauschen für jeden möglichen Pfad getrennt bestimmt werden muß. Die angenommenen Daten sind durch die States im Trellis-Diagram festgelegt. Eine Begrenzung der Noise Prediction auf den Filtergrad 1 ist daher zu bevorzugen.

Die Anwendung der Noise Prediction wird bevorzugt auf das Signal $f(k)$ beschränkt. Das Signal $a(k)$ erhält durch eine AM-Demodulation keine wesentliche charakteristische Färbung, so dass hier nicht unbedingt eine Farbbewertung vorgesehen werden muss. Der auf diese Überlegungen basierende Ersatzkanal 11b wurde bereits oben anhand von Fig 2b beschrieben.

Eine Detektion eines empfangenen Signals mit den hier vorgeschlagenen neuen Empfängern gelingt nur, wenn die Werte in der Zuweisungs- oder ROM-Tabelle des Ersatzkanals mit einer ausreichenden Genauigkeit bestimmt werden können. Dazu werden der Mobilfunkkanal und damit auch der Ersatzkanal während der Dauer eines Bursts als zeitinvariant angenommen. Da aber nur ca. alle 10 ms ein Burst gesendet wird, kann sich in der Zeit zwischen den jeweiligen Bursts der Mobilfunkkanal deutlich verändern. Deshalb muß ggf. für jeden Burst der Kanal neu geschätzt werden. Die Kanalschätzung kann über verschiedene Wege realisiert werden. Nachfolgend werden beispielhaft drei Wege aufgezeigt.

Der erste Weg erfolgt mit Hilfe einer Messung der Mittelwerte und Varianzen. Sind dem Empfänger die gesendeten Daten bekannt, so weiß er, in welchem Zustand sich der Ersatzkanal befindet und kann die Mittelwerte, die Varianzen und die Autokorrelationsfunktion messen. Die Genauigkeit der Messung hängt davon ab, wie viele Meßwerte für jeden Zustand zur Verfügung stehen.

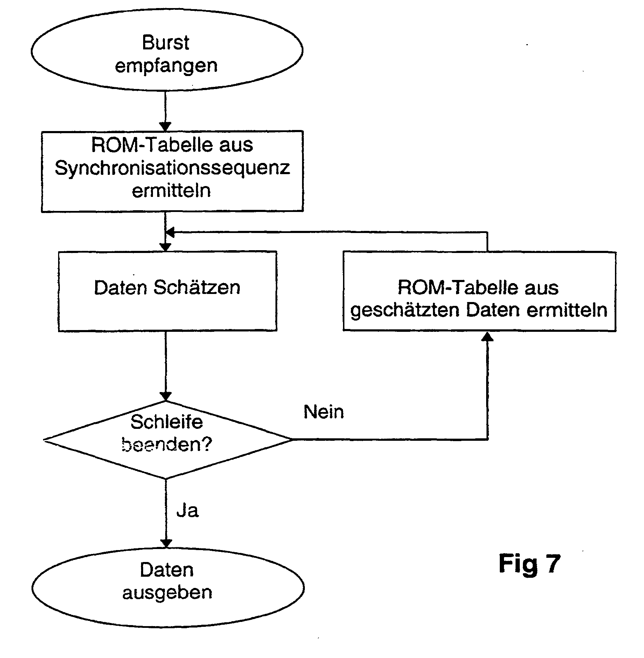

In Versuchen wurde festgestellt, daß aus einem Burst der Kanal gemessen werden kann. Es wird zunächst davon ausgegangen, daß zunächst keine Werte in der ROM-Tabelle vorhanden sind. Es müssen daher zuerst Werte aus einer Synchronisationssequenz gemessen werden. Mit diesen Werten können die Daten geschätzt, dann der Kanal neu gemessen und wiederum die Daten geschätzt werden. Dieser Vorgang kann mehrfach wiederholt werden. In jedem Durchgang verbessert sich die Messung des Kanals und damit wieder die Qualität der Schätzung der Daten. Diese Schleife kann entweder nach einer festen Anzahl von Durchgängen oder dann abgebrochen werden, wenn sich die Daten nicht mehr geändert haben. Dieser Vorgang ist in Fig 7 schematisch dargestellt. Verbesserungen können dadurch erreicht werden, daß die Werte des letzten Bursts in der ROM-Tabelle nicht weggeworfen werden oder die Redundanz in den Daten genutzt wird.

Ein weiterer Weg ist die Korrelative Kanalschätzung. Aus den Empfangswerten einer Synchronisationssequenz im Basisband und einer gesendeten Synchronisationssequenz wird die Kreuzkorrelierte gebildet. Diese Kreuzkorrelierte ist die Faltung der Gewichtsfunktion des Ersatzkanals mit der Autokorrelierten der Synchronisationssequenz. Wird die Synchronisationssequenz so gewählt, daß der benötigte Anteil der AKF eine Dirac-Funktion ist, so ist die gebildete Kreuzkorrelationsfunktion die gesuchte Gewichtsfunktion. Erfüllt die AKF diese Anforderung nicht, muß die gesuchte Gewichtsfunktion durch eine Multiplikation der Kreuzkorrelierten mit einer Matrix ermittelt werden. Die dazu notwendige Matrix kann in dem Empfänger, z.B. in dem oben genannten Speicher 34, fest gespeichert werden. Ein Vorteil der korrelativen Kanalschätzung ist es, daß durch sie die Synchronisation auf den Symboltakt mit erledigt werden kann.

Für die Funktion des Viterbi-Algorithmus mit den oben beschriebenen Metriken werden die in der ROM-Tabelle des Ersatzkanals gespeicherten Mittelwerte, Varianzen und Autokorrelationsfunktionen benötigt. Eine korrelative Kanalschätzung liefert als Ergebnis die Gewichtsfunktion des Ersatzkanals für die Mehrwegeausbreitung. Da diese Gewichtsfunktion den Übertragungskanal vollständig charakterisiert, sind die Werte in der ROM-Tabelle mit der Bestimmung der Gewichtsfunktion festgelegt. Die Zuordnung der Mittelwerte, Varianzen und Autokorrelationsfunktionen zu einer einzelnen, möglichen Gewichtsfunktion kann über eine Tabelle erfolgen, die ebenfalls in einem Speicher, insbesondere einem ROM, im Empfänger gespeichert ist. Diese Tabelle kann entweder durch Berechnungen oder durch Messung für jede gewünschte Gewichtsfunktion im Simulationsmodell mit beliebiger Genauigkeit ermittelt werden. Der Platzbedarf einer derartigen Tabelle beträgt je nach gewünschter Auflösung der Gewichtsfunktionen im Bereich einiger kByte.

Um die Fehlerfortpflanzung durch die Integration der Momentanfrequenz zu umgehen, wird ein Ersatzraum definiert und in diesem die korrelative Kanalschätzung durchgeführt. Dabei kann durch Messung, wie bereits oben vorgeschlagen, eine Tabelle ermittelt werden, welche die für den Viterbi Algorithmus notwendigen Werte zur Verfüung stellt.

Der Ersatzraum wird dabei in einer komplexen Ebene gebildet, da die einzelnen Mehrwegekanäle in dieser Ebene unterschieden werden müssen. Als Empfangssignal steht die Amplitudeninformation $a(k)$ und die Momentanfrequenz $f(k)$ zur Verfügung. Durch die folgende Gleichung wird jeder möglichen Kombination der Empfangssignale ein Punkt $p(k)$ in dem neuen Raum zugewiesen.

$$p(k) = a(k) \cdot e^{j \cdot f(k)} \qquad (7\text{-}1)$$

Vorteil dieser Transformation ist, daß das Signal bezüglich der Amplitude identisch mit dem Signal im Basisband behandelt wird, es aber zu keiner Fehlerfortpflanzung für die manchmal zufälligen Werte der Momentanfrequenz *f*(*k*) kommt, da diese nicht mehr integriert werden. Anschließend wird eine korrelative Kanalschätzung durchgeführt, wobei das komplexe Basisbandsignal durch das Signal *p*(*k*) des neuen Raumes ersetzt wird.

Der dritte Weg ist die Kanalschätzung aus der Amplitude. Da die Werte für die Momentanfrequenz bei manchen Kanälen teilweise zufällig sind und dies bei der Kanalschätzung aber noch nicht bekannt ist, wird eine Kanalschätzung durchgeführt, die nur auf der Amplitudeninformation beruht und daher bevorzugt für die oben beschriebenen Empfänger geeignet sind. Da bei einem AWGN-Kanal das Empfangssignal eine konstante Amplitude besitzt, ist mit einem solchen Verfahren keine Synchronisation bezüglich des Symboltaktes möglich. Für die nachfolgende Betrachtung wird der Symboltakt als ideal bestimmt angenommen.

Für das Empfangssignal *e*(*t*) nach einem 2-Wege-Kanal, wie er auch in der Simulationsumgebung verwendet wird, gilt:

$$e(t) = h(0) \cdot s(t) + h(1) \cdot s(t - T_{Bit}) + n(t) \tag{7-7}$$

Das Rauschen *n*(*t*), das unabhängig vom Zustand des Kanals ist, wird vernachlässigt. Als weiteres wird ohne Beschränkung der Allgemeinheit gefordert, daß für die Impulsantwort gilt:

$$\sum_i \left| h(i) \right|^2 = 1 \tag{7-8}$$

$$h(1) = h_{\mathrm{Re}}(1) + j \cdot h_{\mathrm{Im}}(1) \tag{7-9}$$

h(0) ist dabei reel und positiv.

Für die beiden Zustände der zu entscheidenden binären Informationen der gesendeten Daten wird nun der Erwartungswert für die Empfangsleistung gemessen. Damit ist eine ausreichende Genauigkeit für die Erwartungswerte zu erzielen. Unter der Vernachlässigung des Rauschens für die Erwartungswerte E ergibt sich:

$$\mathrm{E}\left\{ \left| e(k \cdot T_{Bit}) \right|^2 \middle| d(k) = 1 \right\} = \frac{E_s}{T_{Bit}} \cdot \left( (h(0) + h_{\mathrm{Im}}(1))^2 + (h_{\mathrm{Re}}(1))^2 \right) \tag{7-21}$$

$$\mathrm{E}\left\{ \left| e(k \cdot T_{Bit}) \right|^2 \middle| d(k) = -1 \right\} = \frac{E_s}{T_{Bit}} \cdot \left( (h(0) - h_{\mathrm{Im}}(1))^2 + (h_{\mathrm{Re}}(1))^2 \right) \tag{7-22}$$

Der Wert $\tilde{\gamma}_{\mathrm{Im}}$ ist die Differenz der beiden Erwartungswerte.

$$\begin{aligned}
\tilde{\gamma}_{\mathrm{Im}} &= \mathrm{E}\left\{ \left| e(k \cdot T_{Bit}) \right|^2 \middle| d(k) = 1 \right\} - \mathrm{E}\left\{ \left| e(k \cdot T_{Bit}) \right|^2 \middle| d(k) = -1 \right\} & (7-23) \\
&= \frac{E_s}{T_{Bit}} \cdot \left( (h(0) + h_{\mathrm{Im}}(1))^2 - (h(0) - h_{\mathrm{Im}}(1))^2 \right) & (7-24) \\
&= \frac{4 E_s}{T_{Bit}} \cdot h(0) \cdot h_{\mathrm{Im}}(1) & (7-25)
\end{aligned}$$

Der Wert $\gamma_{\mathrm{Im}}$ ist $\tilde{\gamma}_{\mathrm{Im}}$ mit einer Normierung aus dem Mittelwert der Erwartungswerte.

$$\gamma_{\mathrm{Im}} = \frac{2\widetilde{\gamma}_{\mathrm{Im}}}{\mathrm{E}\Big\{\big|e(k \cdot T_{Bit})\big|^2 \,\big|\, d(k)=1\Big\} + \mathrm{E}\Big\{\big|e(k \cdot T_{Bit})\big|^2 \,\big|\, d(k)=-1\Big\}} \qquad (7\text{-}26)$$

$$= \frac{4 \cdot h(0) \cdot h_{\mathrm{Im}}(1)}{\big|h(0)\big|^2 + \big|h(1)\big|^2} \qquad (7\text{-}27)$$

Hiermit ist die imaginäre Komponente von h(1) charakterisiert.

Für die Charakterisierung der reelen Komponente von h(1) wird das Betragsquadrat der Amplitude nicht nur im Symboltakt, sondern auch noch um eine halbe Bitperiode verschoben abgetastet (k + 1/2).

Die größte Signifikanz über den Kanal ist in diesem Signal enthalten, wenn $d(k) \neq d(k+1)$ ist.

Der Erwartungswert kann dann mit ausreichender Genauigkeit gebildet werden.

$$\mathrm{E}\left\{\left|e\!\left(\!\left(k + \frac{1}{2}\right) \cdot T_{Bit}\right)\right|^2 \,\bigg|\, d(k) \neq d(k+1)\right\} = \frac{E_s}{T_{Bit}} \cdot (h(0) + h_{\mathrm{Re}}(1))^2 \qquad (7\text{-}35)$$

Der Anteil von $h_{\mathrm{Im}}(1)$ geht sowohl positiv wie auch negativ in den Erwartungswert ein und wird deshalb vernachlässigt. Aus diesem Erwartungswert und den beiden schon ermittelten Erwartungswerten wird der Wert $\widetilde{\gamma}_{\mathrm{Re}}$ gebildet.

$$\widetilde{\gamma}_{\mathrm{Re}} = 2 \cdot \mathrm{E}\left\{\left|e\!\left(\!\left(k + \frac{1}{2}\right) \cdot T_{Bit}\right)\right|^2 \,\bigg|\, d(k) \neq d(k+1)\right\}$$
$$- \mathrm{E}\Big\{\big|e(k \cdot T_{Bit})\big|^2 \,\big|\, d(k)=1\Big\} - \mathrm{E}\Big\{\big|e(k \cdot T_{Bit})\big|^2 \,\big|\, d(k)=-1\Big\} \qquad (7\text{-}36)$$

$$\widetilde{\gamma}_{\mathrm{Re}} = \frac{2E_s}{T_{Bit}} \cdot \Big(2 \cdot h(0) \cdot h_{\mathrm{Re}}(1) - (h_{\mathrm{Im}}(1))^2\Big) \qquad (7\text{-}37)$$

Der Wert $\widetilde{\gamma}_{\mathrm{Re}}$ wird jetzt noch wie der Wert $\widetilde{\gamma}_{\mathrm{Im}}$ normiert und ergibt dann:

$$\gamma_{\mathrm{Re}} = \frac{4 \cdot h(0) \cdot h_{\mathrm{Re}}(1) - 2 \cdot (h_{\mathrm{Im}}(1))^2}{|h(0)|^2 + |h(1)|^2} \qquad (7\text{-}38)$$

Aus den Werten $\gamma_{\mathrm{Re}}$, $\gamma_{\mathrm{Im}}$ und der Beschränkung nach der Gleichung (7-8) kann der 2-Wege-Kanal berechnet werden. Da aber die Mittelwerte und Varianzen aus einer ROM-Tabelle entnommen werden, ist eine Charakterisierung des Kanals ausreichend. Hinzu kommt, daß der Einfluß von Schätzfehlern durch jede weitere Berechnung mit immer größeren Aufwand bestimmt werden muß. Durch die Leistungsnormierung sind die beiden Werte von der Dynamik des Empfangssignals unabhängig.

Versuche und Auswertungen haben gezeigt, daß die Werte $\gamma_{\mathrm{Re}}$ und $\gamma_{\mathrm{Im}}$ speziell für die kritischen Kanäle eine hohe Auflösung erzielen. Der Ansatz, den Kanal über die Amplitude zu charakterisieren, ist daher mit Vorteil zu verwenden. Der Einfluß des Rauschens auf die Werte kann mit dieser linearen Beschreibung abgeschätzt werden. Für einen Abtastwert zwischen dem Symboltakt müssen die Gleichungen ggf. erweitert werden.

Der neue Empfänger bzw das neue Verfahren erlauben gegenüber dem Stand der Technik einen wesentlich verbesserten Empfang. Dabei wird mit anderen Worten ausgedrückt ausgehend von bereits empfangenen Werten unter Berücksichtigung von Erfahrungswerten aus dem Ersatzkanal und der Kanalschätzung im Empfänger eine Datensequenzschätzung durchgeführt, die zu wesentlich geringeren Fehlerquoten bei der Entscheidung der Daten führt. Eine mögliche PLC-Anwendung ist z.B. die Fernübertragung von digitalen Daten für eine Fernauslesung bei einem Elektrizitätszähler. In diesem Fall würde als Antenne 2 ein Ankoppelglied zur Verbindung mit einem Versorgungsnetz zur Anwendung kommen, mit welchem ein Elektrizitätszähler datentechnisch über eine geeignete Schnittstelle verbunden ist.

Aus den obigen Ausführungen zeigt sich, daß es im Einklang mit dem DECT-Standard möglich ist, einen herkömmlichen Empfänger in seiner Leistungseffizienz deutlich zu steigern und unempfindlich gegenüber einer Mehrwegeausbreitung zu machen. Deshalb kommt für den inkohärenten Empfänger eine Entzerrung der Intersymbol-Interferenzen zur Anwendung. Damit dieser Empfänger bei allen möglichen Kanälen funktioniert, wird bevorzugt zusätzlich die Information über die Amplitude des Empfangssignals benötigt und dies, obwohl die Amplitude des Sendesignals keine Information enthält. Da die Amplitude des Empfangssignals keine Phaseninformation enthält, ist auch der modifizierte Empfänger, dem ein AM-Demodulator hinzugefügt wurde, ein inkohärenter Empfänger.

Die Entzerrung der Intersymbol-Interferenzen kann auf Basis eines Trellis erfolgen und wird bevorzugt mit Hilfe eines Viterbi-Algorithmus durchgeführt. Da das Rauschen abhängig vom Übergang im Trellisdiagramm ist und die Informationen über die Amplitude und der Momentanfrequenz miteinander verbunden werden müssen, ist eine darauf angepaßte Metrik für den Viterbi-Algorithmus vorgesehen. Mit dieser neuen Metrik ist die Kombination von Amplitude und Momentanfrequenz möglich, ohne daß ein Verlust für die Kanäle entsteht, bei denen die Amplitude keine Information enthält. Der Einsatz dieser Metrik ist nicht nur auf die Kanalentzerrung beschränkt, sondern ermöglicht ggf. auch die inkohärente Demodulation von Verfahren mit informationstragender Amplitude. Die Leistungseffizienz dieser Metrik wurde in Simulationen gemessen. Mehrwegekanäle mit einer Einflußlänge bis zu einer Symboldauer, bei denen diese Metrik versagt, wurden bis nicht gefunden.

Die Farbigkeit des Rauschens nach dem FM-Diskriminator wird mit einer Noise Prediction zur Minimierung der Rauschleistung genutzt. Die Noise Prediction ist an die Trellis-Entzerrung angepaßt und in die neue Metrik des Viterbi-Algorithmus eingebunden. Ein derartiger Empfänger erreicht in seiner Leistungseffizienz fast die Eigenschaften eines kohärenten Empfängers und ist in allen Kanälen dem herkömmlichen Empfänger überlegen.

## Patentansprüche

1.  Empfänger (1a, 1b) für ein trägermoduliertes Signal (ES, e(k)), welches eine digitale Information (d(k)) enthält, mit:

    -   einer Demodulationseinrichtung (30) mit einen FM-Demodulator (5), die an ihrem Ausgang zumindest ein zeitdiskretes Signal (f(k), a(k)) führt und
    -   einem der Demodulationseinrichtung (30) nachgeschalteten Entscheidungsglied (32), das an seinem Ausgang die digitale Information (d(k)) führt,

    **dadurch gekennzeichnet, dass** das Entscheidungsglied (32) einen Speicher (34) zur Aufnahme einer Zuordnungs- oder ROM-Tabelle eines Ersatzkanals aufweist und derart ausgebildet ist, dass unter Berücksichtigung eines datenabhängigen Rauschanteils im zeitdiskreten Signal (f(k), a(k)) mittels Minimierung der Datenfehlerwahrscheinlichkeit von dem zeitdiskreten Signal (f(k), a(k)) die digitale Information (d(k)) ableitbar ist, dass eine Trellisstruktur gebildet ist, welche für die Übergänge in der Trellisstruktur eine Übergangswahrscheinlichkeit Pr gemäß der Beziehung

$$\Pr(k) = C \cdot \frac{1}{\sqrt{\upsilon^{(i)}}} \cdot e^{-\frac{(f(k)-f_d^{(i)})^2}{2\upsilon^{(i)}}}$$

aufweist, worin k der Zeitindex, f das zeitdiskrete Signal, $f_d$ der Erwartungswert des für den jeweiligen Übergang erwarteten Ausgangssignals, u die Varianz des Rauschens für den jeweiligen Übergang, i ein Index für den jeweiligen Übergang und C ein vorgebbarer zeitbezogener Faktor sind, dass die Demodulationseinrichtung (30) zusätzlich einen AM-Demodulator (15) umfasst und die zeitdiskreten Ausgangssignale des AM-Demodulators (15) und des FM-Demodulators (5) (a(k) und f(k)) dem Entscheidungsglied (32) als Information zugeführt sind, wobei die digitale Information (d(k)) von zumindest einem. der Ausgangssignale (a(k) oder f(k)) abgeleitet ist und im Speicher (34) eine in Abhängigkeit der digitale Information (d(k)) gemessene Varianz u des Rauschens und/oder Farbigkeit des Rauschens gespeichert ist, dass das Entscheidungsglied (32) als digitale Verarbeitungseinrichtung ausgebildet ist, welche den Speicher (34) zur Aufnahme einer Zuordnungsoder ROM-Tabelle und der Programme für den Betrieb sowie einen Microcomputer oder einen Rechner oder einen digitalen Signalprozessor (33) aufweist und/oder dass das Entscheidungsglied (32) einen Noise Predictor (40) aufweist, welcher ein weiteres Entschei‌dungsglied (41) aufweist, dem ausgangsseitig ein Modulator (42) nachgeschaltet ist, dessen Ausgangssignal (*s* (*k*)) mittels einem Verknüpfungsglied (45) von dem über ein Zeitglied (44) zugeführten Eingangssignal (e(k)) subtrahiert wird und das dabei erzeugte Signal als Art Rauschsignal (n(k)) nach einer Filterung im Predictionfilter (43) von dem dem weiteren Entscheidungsglied (41) zugeführten Eingangssignal e(k) mittels einem weiteren Verknüpfungsglied (45') subtrahiert wird.

2. Empfänger nach Anspruch 1, **dadurch gekennzeichnet, dass** der Trellisstruktur ein Viterbi-Algorithmus zugeordnet ist, der für die Übergangswahrscheinlichkeit eine Übergangsmetrik $\lambda_{zi}$ hat, die zwei Summanden Umfasst, wobei der eine Summand vom zeitdiskreten Signal abhängig und der andere Summand vom zeitdiskreten Signal unabhängig ist und dass die Übergangsmetrik $\lambda_{zi}$ gemäß der Beziehung

$$\lambda_{z_i} = \frac{1}{2\upsilon^{(i)}} \cdot \left(f(k) - f_d^{(i)}\right)^2 + \underbrace{\frac{1}{2}\ln\left(\upsilon^{(i)}\right)}_{const.}$$

ausgebildet ist.

3. Empfänger nach Anspruch 1, **dadurch gekennzeichnet, dass** der vom zeitdiskreten Signal abhängige Summand einen FM-Demodulator (5) bezogenen Term und/oder einen AM-Demodulator (15) bezogenen Term umfaßt mit einer Zweigmetrik $\lambda^{(i)}$ gemäß der Beziehung

$$\lambda^{(i)}(k) = \frac{1}{2\upsilon_f^{(i)}}\left(f(k) - f_d^{(i)}\right)^2 + \frac{1}{2\upsilon_a^{(i)}}\left(a(k) - \bar{a}^{(i)}\right)^2 + \underbrace{\frac{1}{2}\ln\left(\upsilon_f^{(i)}\right) + \frac{1}{2}\ln\left(\upsilon_a^{(i)}\right)}_{const.}$$

worin a(k) das zeitdiskrete Ausgangssignal des AM-Demodulators (15), f(k) das zeitdiskrete Ausgangssignal des FM-Demodulators (5), $\upsilon_a$ die Varianz des Rauschens des AM-demodulierten (15) Ausgangssignals für den jeweiligen Übergang, $\upsilon_f$ die Varianz des Rauschens des FM-demodulierten Ausgangssignals für den jeweiligen Übergang, $f_d$ der Erwartungswert des für den jeweiligen Übergang erwarteten Ausgangssignals des FM-Demodulators (5) und $\bar{a}$ der Erwartungswert des für den jeweiligen Übergang erwarteten Ausgangssignals des AM-Demodulators (15) sind und dass der vom zeitdiskreten Signal (a(k), f(k)) abhängige Summand einen Teilterm aufweist, der eine vorgegebene Rauschart berücksichtigt.

4. Verfahren zum Bearbeiten eines trägermodulierten Signals (ES, e(k)), das eine zu übertragende digitale Information (d(k)) enthält,

- wobei das trägermodulierte Signal (ES, e(k)) frequenzdemoduliert und zumindest ein zeitdiskretes Signal (a (k), f(k)) erzeugt wird, und
- wobei mittels Minimierung der Datenfehlerwahrscheinlichkeit von dem zeitdiskreten Signal (a(k), f(k)) die digitale Information (d(k)) abgeleitet wird,

**dadurch gekennzeichnet, dass** die digitale Information (d(k)) unter Berücksichtigung eines gespeicherten datenabhängigen Rauschanteils im zeitdiskreten Signal (a(k), f(k)) und einer Zuordnungstabelle eines Ersatzkanals erzeugt wird, dass das trägermodulierte Signal (ES, e(k)) frequenz- und amplitudendemoduliert wird, dass die beiden dabei erzeugten zeitdiskreten Signale (a(k), f(k)) zur Ableitung der digitalen Information (d(k) dienen, dass ein sender-, übertragungsweg- und/oder demodulatorbezogener Einfluss auf die zu übertragende digitale Information (d(k)) mittels einer Trellisstruktur nachgebildet wird und dass für die Übergänge in der Trellisstruktur eine Übergangswahrscheinlichkeit Pr gemäß der Beziehung

$$Pr(k) = C \cdot \frac{1}{\sqrt{v^{(i)}}} \cdot e^{-\frac{(f(k)-f_d^{(i)})^2}{2v^{(i)}}}$$

verwendet wird, worin k der Zeitindex, f das zeitdiskrete Signal, $f_d$ der Erwartungswert des für den jeweiligen Übergang erwarteten Signals, u die Varianz des Rauschens für den jeweiligen Übergang, i ein Index für den jeweiligen Übergang und C ein vorgebbarer zeitbezogener Faktor sind.

5. Verfahren nach Anspruch 4, **dadurch gekennzeichnet, dass** in der Trellisstruktur mit einem Viterbi-Algorithmus entschieden wird, der für die Übergangswahrscheinlichkeit mit einer Übergangsmetrik $\lambda_{zi}$ arbeitet, die zwei Summanden umfasst, wobei der eine Summand vom zeitdiskreten Signal (a(k), f(k)) abhängig und der andere Summand vom zeitdiskreten Signal (a(k), f(k)) unabhängig ist und dass die Übergangsmetrik $\lambda_{zi}$ gemäß der Beziehung

$$\lambda_{z_i} = \frac{1}{2v^{(i)}} \cdot \left( f(k) - f_d^{(i)} \right)^2 + \underbrace{\frac{1}{2} \ln\left( v^{(i)} \right)}_{const.}$$

gebildet wird.

6. Verfahren nach Anspruch 5, **dadurch gekennzeichnet, dass** der vom zeitdiskreten Signal (a(k), f(k)) abhängige Summand einen auf das frequenzdemodulierte Ausgangssignal bezogenen Term und /oder einen auf das amplitudendemodulierte Ausgangssignal bezogenen Term umfaßt, mit einer Zweigmetrik $\lambda^{(i)}$ gemäß der Beziehung

$$\lambda^{(i)}(k) = \frac{1}{2v_f^{(i)}} \left( f(k) - f_d^{(i)} \right)^2 + \frac{1}{2v_a^{(i)}} \left( a(k) - \bar{a}^{(i)} \right)^2 + \underbrace{\frac{1}{2} \ln\left( v_f^{(i)} \right) + \frac{1}{2} \ln\left( v_a^{(i)} \right)}_{const.}$$

worin a(k) das amplitudendemodulierte zeitdiskrete Ausgangssignal, f(k) das frequenzdemodulierte zeitdiskrete Ausgangssignal, $v_a$ die Varianz des Rauschens des amplitudendemodulierten zeitdiskreten Ausgangssignals für den jeweiligen Übergang; $v_f$ die Varianz des Rauschens des frequenzdemodulierten zeitdiskreten Ausgangssignals für. den jeweiligen Übergang, $f_d$ der Erwartungswert des für den jeweiligen Übergang erwarteten frequenzdemodulierten zeitdiskreten Ausgangssignal und $\bar{a}$ der Erwartungswert des für den jeweiligen Übergang erwarteten amplitudendemodulierten zeitdiskreten Ausgangssignal sind und dass der vom zeitdiskreten Signal (a(k), f(k)) abhängige Summand einen Teilterm aufweist, mit welchem eine vorgegebene Rauschart berücksichtigt wird.

**Claims**

1. A receiver (1a, 1b) for a carrier-modulated signal (ES, e(k)) which contains digital information (d(k)), with:

   - a demodulation device (30) with a FM demodulator (5) which carries at its output at least one time-discrete signal (f(k),a(k)) and
   - a decision element (32), connected to the output of said demodulation device, which carries at its output said digital information (d(k)),

   **characterized in that** said decision element (32) has a memory (34) for storing an assignment or ROM table of an equivalent channel model and is formed thus that by taking into account a data-dependent noise component in said time-discrete signal (f(k), a(k)) the digital information (d(k)) can be derived from said time-discrete signal (f(k), a(k)) by minimising the data error probability, and further a trellis structure is formed which has a transition probability Pr for the transitions in said trellis structure according to equation

$$\Pr(k) = C \cdot \frac{1}{\sqrt{\upsilon^{(i)}}} \cdot e^{-\frac{(f(k)-f_d^{(i)})^2}{2\upsilon^{(i)}}}$$

with the time index k, the time-discrete signal f, the expectation value fd of the output signal expected for the respective transition, the variance u of the noise for the respective transition, the index i for the respective transition and a time-related factor C that can be preset,

and further said demodulation device (30) additionally comprises an AM demodulator (15), and the time-discrete output signals of said AM demodulator (15) and said FM demodulator (5) (a(k) and f(k)) are fed as information into said decision element (32), whereby the digital information (d(k)) is derived from at least one of the output signals (f(k), a(k)), and a variance u of the noise and/or colour of the noise measured depending on the digital information (d(k)) is stored in memory (34),

and further said decision element (32) is formed as a digital processing unit which comprises said memory (34) for storing an assignment or ROM table and the programs for operation as well as a micro computer or a computer or a digital signal processor (33) and/or

further said decision element (32) comprises a noise predictor (40) with a second decision element (41) and a downstream connected modulator (42) where the output signal ($s(k)$ is subtracted by means of a combining gate (45) from the input signal (e(k)), which is fed via a delay mean (44), and the signal (n(k)) generated herein, as some kind of noise signal, is subtracted after filtering with a prediction filter (43) from the input signal e(k), which is fed to said second decision element (41), by means of a second combining gate (45').

2. The receiver according to claim 1,
wherein said trellis structure is assigned a Viterbi algorithm which for the transition probability has a transition metric $\lambda_{zi}$ comprising two addends, where one addend depends on the time-discrete signal and the other addend is independent of the time-discrete signal, and
wherein said transition metric $\lambda_{zi}$ is formed according to equation

$$\lambda_{z,} = \frac{1}{2\upsilon^{(i)}} \cdot \left(f(k)-f_d^{(i)}\right)^2 + \underbrace{\frac{1}{2}\ln\left(\upsilon^{(i)}\right)}_{const.}.$$

3. The receiver according to claim 1,
wherein said addend depending on the time-discrete signal comprises a term related to said FM demodulator (5) and/or a term related to said AM demodulator (15) with a branch metric $\lambda^{(i)}$ according to equation

$$\lambda^{(i)}(k) = \frac{1}{2\upsilon_f^{(i)}}\left(f(k)-f_d^{(i)}\right)^2 + \frac{1}{2\upsilon_a^{(i)}}\left(a(k)-\bar{a}^{(i)}\right)^2 + \underbrace{\frac{1}{2}\ln\left(\upsilon_f^{(i)}\right)+\frac{1}{2}\ln\left(\upsilon_a^{(i)}\right)}_{const.}$$

with the time-discrete output signal a(k) of the AM demodulator (15), the time-discrete output signal f(k) of the FM demodulator (5), the variance $\upsilon_a$ of the noise of the AM demodulated (15) output signal for the respective transition, the variance $\upsilon_f$ of the noise of the FM demodulated (15) output signal for the respective transition, the expectation value fd of the FM demodulator (5) output signal expected for the respective transition and the expectation value $\bar{a}$ of the AM demodulator (5) output signal expected for the respective transition, and
wherein said addend depending on the time-discrete signal (a(k), f(k)) has a partial term which takes a predetermined noise type into account.

4. A method for processing a carrier-modulated signal (ES, e(k)) which contains digital information (d(k)) to be transmitted,

- whereby said carrier-modulated signal (ES, e(k)) is frequency-demodulated and at least one time-discrete signal (a(k), f(k)) is generated and
- whereby said digital information (d(k)) is derived from said time-discrete signal (a(k), f(k)) by minimising the data error probability,

**characterized in that** said digital information (d(k)) is generated by taking into account a stored, data dependent noise component in said time-discrete signal (a(k), f(k)) and an assignment table of an equivalent channel model, wherein said carrier-modulated signal (ES, e(k)) is frequency-demodulated and amplitude-demodulated, wherein both time-discrete signals (a(k), f(k)) generated hereby are used for deriving said digital information (d(k)), wherein an influence on said digital information (d(k)) to be transmitted related to transmitter, transmission channel and/or demodulator is emulated by means of a trellis structure, and wherein a transition probability Pr according to equation

$$\Pr(k) = C \cdot \frac{1}{\sqrt{\upsilon^{(i)}}} \cdot e^{-\frac{(f(k) - f_d^{(i)})^2}{2\upsilon^{(i)}}}$$

is used for the transitions in said trellis structure, with the time index k, the time-discrete signal f, the expectation value fd of the signal expected for the respective transition, the variance $\upsilon$ of the noise for the respective transition, the index i for the respective transition and a time-related factor C that can be preset.

5. The method according to claim 4,
wherein decisions in said trellis structure are made by a Viterbi algorithm which uses a transition metric $\lambda_{zi}$ for the transition probability that comprises two addends, where one addend depends on said time-discrete signal (a(k), f(k)) and the other addend is independent of said time-discrete signal (a(k), f(k)), and wherein said transition metric $\lambda_{zi}$ is formed by the equation

$$\lambda_{z_i} = \frac{1}{2\upsilon^{(i)}} \cdot \left(f(k) - f_d^{(i)}\right)^2 + \underbrace{\frac{1}{2}\ln\left(\upsilon^{(i)}\right)}_{const.}.$$

6. The method according to claim 5,
wherein said addend depending on said time-discrete signal (a(k), f(k)) comprises a term related to the frequency-demodulated output signal and/or a term related to the amplitude-demodulated output signal, with a branch metric $\lambda^{(i)}$ according to equation

$$\lambda^{(i)}(k) = \frac{1}{2\upsilon_f^{(i)}}\left(f(k) - f_d^{(i)}\right)^2 + \frac{1}{2\upsilon_a^{(i)}}\left(a(k) - \bar{a}^{(i)}\right)^2 + \underbrace{\frac{1}{2}\ln\left(\upsilon_f^{(i)}\right) + \frac{1}{2}\ln\left(\upsilon_a^{(i)}\right)}_{const.}$$

with the amplitude-demodulated time-discrete output signal a(k), the frequency-demodulated time-discrete output signal f(k), the variance $\upsilon_a$ of the noise of the amplitude-demodulated time-discrete output signal for the respective transition, the variance $\upsilon_f$ of the noise of the frequency-demodulated time-discrete output signal for the respective transition, the expectation value fd of the frequency-demodulated time-discrete output signal expected for the respective transition and the expectation value $\bar{a}$ of the amplitude-demodulated time-discrete output signal expected for the respective transition, and wherein said addend depending on said time-discrete signal (a(k), f(k)) has a partial term which takes a predetermined noise type into account.

**Revendications**

1. Récepteur (1a, 1b) pour un signal à support modulé (ES, e(k)) contenant d'un signal numérique (d(k)), comportant:

- un moyen de démodulation (30) avec un FM-démodulator (5) à la sortie duquel peuvent être prélevées au moins un signaux discret dans de temps (f(k), a(k)) et
- un organe décideur (32) suivant au moyen de démodulation (30) et à la sortie duquel peuvent être prélevées le signal numérique (d(k)),

**caractérisé en ce que** ledit organe décideur (32) comprenant d'une mémoire (34) qui contiennent une table de conversion ou une table ROM d'un canal de secours dont est réalisée en tenant compte d' une composante de bruit à données dans ledit signaux discret dans de temps (f(k), a(k)), ledit signal numérique (d(k)) peut être dérivé au moyen de minimiser la probabilité conditions d'erreurs de données de ledit signaux discret dans de temps (f(k), a(k)), **en ce qu'**une structure de trellis est formé, du fait pour la transition dans ladite structure de trellis comprenant une probabilité de la transition Pr selon d'une équation

$$\Pr(k) = C \cdot \frac{1}{\sqrt{\upsilon^{(i)}}} \cdot e^{-\frac{(f(k)-f_d^{(i)})^2}{2\upsilon^{(i)}}},$$

où k représente l'index de temps, f est ledit signaux discret dans de temps, $f_d$ est une valeur attendue pour la transition respectif de ledit signal de sortie attendue, u est la variance d'un bruit pour la transition respectif, i est un index pour la transition respectif et C représente un facteur prédéterminée sur la base de temps, **en ce que** ledit moyen de démodulation (30) comprenant en plus un démodulateur AM (15) et ledit signal de sortie discret dans de temps (a(k) et f(k)) du démodulateur AM (15) et du démodulateùr FM (5) sont fournis à ledit organe décideur (32) comme information, dans lequel ledit signal numérique (d(k)) peut être dérivé au moins d'un de ledit signaux de sortie (a(k) ou f(k)) et dans un mémoire (34) une variance $\upsilon$ de bruit et/ou une coloration fonction de le bruit mesurées en dépendance de ledit signal numérique (d(k)) est mémorisée, **en ce que** ledit organe décideur (32) est formées comme un moyen de traitement numérique, comprenant ledit mémoire (34) pour mémoriser une table de conversion ou une table ROM et les programmes du fonctionnement ainsi qu'une micro-ordinateur interne ou un calculateur ou un processeur de signal numérique (33) et/ou ledit organe décideur (32) comprenant un prédicteur de code de bruit (40) ledit comprenant un autre organe décideur (41) à la sortie un modulateur (42) est placé en aval, à soustraire au moyen d'une porte de combinaison comptage (45) ledit signal de sortie (s(k)) d'un signal d'entrée (e(k)) étant amenée à l'aide d'un dispositif de temporisation (44) et ainsi un signal générée après une filtrage dans un filtre prédiction (43) étant soustraire comme un signal de bruit de ledit signal d'entrée (e(k)), qui est fournie d'autre organe décideur (41), au moins d'autre porte de combinaison comptage (45').

2. Récepteur selon la revendication 1, dans lequel ladite structure de trellis est affectée d'un algorithme de Viterbi, ledit comprenant une métrique de la transition $\lambda_{zi}$ pour une probabilité de la transition qui contient deux addende, cet-un addende dépendant de ledit signaux discret dans de temps et cet l'autre addende est indépendant de ledit signaux discret dans de temps et en ce que ladite probabilité de la transition $\lambda_{zi}$ est formé selon d'une équation

$$\lambda_{z_i} = \frac{1}{2\upsilon^{(i)}} \cdot \left(f(k) - f_d^{(i)}\right)^2 + \underbrace{\frac{1}{2}\ln\left(\upsilon^{(i)}\right)}_{const.}.$$

3. Récepteur selon la revendication 1, dans lequel ledit addende dépendant de ledit signaux discret dans de temps (a(k), f(k)) comprenant un terme dépendant d'une démodulateur FM (5) et/ou d'une démodulateur AM (15) ledit comprenant une métrique de la branche $\lambda^{(i)}$ selon d'une équation

$$\lambda^{(i)}(k) = \frac{1}{2\upsilon_f^{(i)}}\left(f(k) - f_d^{(i)}\right)^2 + \frac{1}{2\upsilon_a^{(i)}}\left(a(k) - \bar{a}^{(i)}\right)^2 + \underbrace{\frac{1}{2}\ln\left(\upsilon_f^{(i)}\right) + \frac{1}{2}\ln\left(\upsilon_a^{(i)}\right)}_{const.}$$

où a(k) représente ledit signal de sortie discret dans de temps de ladite démodulateur AM (15), f(k) est ledit signal de sortie discret dans de temps de ladite démodulateur EM (5), $\upsilon_a$ est la variance d'un bruit de ladite signal de sortie AM (15) démodulées pour la transition respectif, $\upsilon_f$ est la variance d'un bruit de ladite signal de sortie FM démodulées pour la transition respectif, $f_d$ est ladite valeur prédéterminée pour le transition respective de ladite signal de sortie prédéterminée de ladite démodulateur FM (5) et $\bar{a}$ est ladite valeur prédéterminée pour le transition respective de ladite signal de sortie prédéterminée de ladite démodulateur AM (15) et en ce que ledit addende dépendant de ledit signaux discret dans de temps (a(k), f(k)) comprenant un terme partielle qui prend en compte un type de bruit prédéterminée.

4. Procédé de traitement un signal à support modulé (ES, e(k)), ledit contenant d'un signal numérique à transmettre,

- dans lequel ledit signal à support modulé (ES, e(k)) est démodulé en fréquence et au moins générées un signal discret dans de temps (a(k), f(k)) et
- dans lequel au moyen de minimiser la probabilité conditions d'erreurs de données de ledit signaux discret dans de temps (f(k), a(k)) ledit signal numérique (d(k)) peut être dérivé,

**caractérisé en ce que** ledit signal numérique (d(k)) est générée en tenant compte d' une composante de bruit à données mémorisée dans ledit signaux discret (a(k), f(k)) dans de temps et une table de conversion d'un canal de secours, **en ce que** ledit signal à support modulé (ES, e(k)) est démodulé en fréquence et en amplitude, **en ce que** ledit signaux discret dans de temps (a(k), f(k)) servent à la formation ledit signal numérique (d(k), **en ce que** une influence d'émetteur ou de trajet de transmission et/ou de démodulateur ayant sur ledit signal numérique (d(k)) à transmettre est émulée au moyen d'une structure de trellis et **en ce que** pour la transition dans ladite structure de trellis une probabilité de la transition Pr selon d'une équation

$$\Pr(k) = C \cdot \frac{1}{\sqrt{\upsilon^{(i)}}} \cdot e^{-\frac{(f(k)-f_d^{(i)})^2}{2\upsilon^{(i)}}}$$

est à utilser, où k représente l'index de temps, f est ledit signaux discret dans de temps, $f_d$ est une valeur attendue pour la transition respectif de ledit signal de sortie attendue, $\upsilon$ est la variance d'un bruit pour la transition respectif, i est un index pour la transition respectif et C représente un facteur prédéterminée sur la base de temps.

5. Procédé selon la revendication 4, dans lequel dans ledit structure de trellis est décider avec un algorithme de Viterbi, ledit comprenant une métrique de la transition $\lambda_{zi}$ pour une probabilité de la transition qui contient deux addende, cet un addende dépendant de ledit signaux discret dans de temps et cet l'autre addende est indépendant de ledit signaux discret dans de temps et en ce que ladite probabilité de la transition $\lambda_{zi}$ est formé selon d'une équation

$$\lambda_{z,} = \frac{1}{2\upsilon^{(i)}} \cdot \left(f(k) - f_d^{(i)}\right)^2 + \underbrace{\frac{1}{2}\ln\left(\upsilon^{(i)}\right)}_{const.}.$$

6. Procédé selon la revendication 5, dans lequel ledit addende dépendant de ledit signaux discret dans de temps (a(k), f(k)) comprenant un terme dépendant d' un signal de sortie démodulé en fréquence et/ou en amplitude ledit comprenant une métrique de la branche $\lambda^{(i)}$ selon d'une équation

$$\lambda^{(i)}(k) = \frac{1}{2\upsilon_f^{(i)}}\left(f(k) - f_d^{(i)}\right)^2 + \frac{1}{2\upsilon_a^{(i)}}\left(a(k) - \bar{a}^{(i)}\right)^2 + \underbrace{\frac{1}{2}\ln\left(\upsilon_f^{(i)}\right) + \frac{1}{2}\ln\left(\upsilon_a^{(i)}\right)}_{const.}$$

où a(k) représente ledit signal de sortie discret dans de temps démodulées en amplitude, f(k) est ledit signal de sortie discret démodulées en fréquence, $\upsilon_a$ est la variance d'un bruit de ladite signal de sortie démodulées en amplitude et discret de temps pour la transition respectif, $\upsilon_f$ est la variance d'un bruit de ladite signal de sortie démodulées en fréquence et discret de temps pour la transition respectif, $f_d$ est ladite valeur prédéterminée pour le transition respective de ladite signal de sortie prédéterminée et démodulées en fréquence et discret de temps et $\bar{a}$ est ladite valeur prédéterminée pour le transition respective de ladite signal de sortie prédéterminée et démodulées en amplitude et discret de temps et en ce que ledit addende dépendant de ledit signaux discret dans de temps (a(k), f(k)) comprenant un terme partielle qui prend en compte un type de bruit prédéterminée.

ES ~2

~3a

3

4 30

33

32 34

d(k)

~1a

**Fig 1a**

ES 2

~3a

3

4 5 6 7

15 6 17 a(k) 69

KT+Tb

KT

f(k) 32

40

d(k)

**Fig 1b**

14 14a

d(k) T T

13

19 11a

v(k) / 21

f̄_d(k) 22

f(k)

ā(k) a(k)

v_a(k) 22

21

18 19

19

**Fig 2a**

EP 1 033 018 B1

Fig 2b

Fig 3

Fig 4

26

ES

2

3a

3

4

e(t)

1

5

f̃(t)

6

7

9

d(k)

**Fig 5**

e(k)

45

41

42

43

n(k)

44

45

ŝ(k)

d̂(k)

40

**Fig 6**

**Fig 7**